(19) Europäisches Patentamt / European Patent Office / Office européen des brevets

(11) **EP 3 675 118 A1**

(12) **EUROPEAN PATENT APPLICATION**
published in accordance with Art. 153(4) EPC

(43) Date of publication:
**01.07.2020 Bulletin 2020/27**

(51) Int Cl.:
*G10K 11/162* (2006.01)   *B32B 5/26* (2006.01)
*B60R 13/08* (2006.01)   *G10K 11/168* (2006.01)

(21) Application number: **18824548.4**

(22) Date of filing: **28.06.2018**

(86) International application number:
**PCT/JP2018/024744**

(87) International publication number:
**WO 2019/004408 (03.01.2019 Gazette 2019/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2017  US 201762527761 P**

(71) Applicant: **M-Techx Inc.**
**Chuo-ku**
**Tokyo 1040033 (JP)**

(72) Inventors:
• **SOTA, Hiroyoshi**
  **Tokyo 150-0011 (JP)**

• **IKEGAYA, Morihiko**
  **Tokyo 150-0011 (JP)**
• **URABE, Kenichi**
  **Tokyo 150-0011 (JP)**
• **ECHIZENYA, Takatsugu**
  **Tokyo 150-0011 (JP)**
• **HIROGAKI, Toshiki**
  **Kyotanabe-shi, Kyoto 610-0394 (JP)**
• **WU, Wei**
  **Kyotanabe-shi, Kyoto 610-0394 (JP)**
• **ISHII, Yoshiaki**
  **Tokyo 150-0011 (JP)**

(74) Representative: **Schön, Christoph**
**Dr. Schön, Neymeyr & Partner mbB**
**Bavariaring 26**
**80336 München (DE)**

(54) **FIBER AGGREGATE FOR SOUND INSULATION, SOUND ABSORBING/INSULATING MATERIAL, AND SOUND ABSORBING/INSULATING MATERIAL FOR VEHICLE**

(57)    A fiber aggregate for sound insulation capable of effectively insulating sound by a simple structure and a sound absorbing and insulating material and a sound absorbing and insulating material for vehicles having the fiber aggregate for sound insulation are provided. The fiber aggregate for sound insulation has an average fiber diameter from 450 nm to 5800 nm and a bulk density from 0.09 g/cm$^3$ to 0.33 g/cm$^3$. The fiber aggregate for sound insulation particularly preferably has an average fiber diameter from 450 nm to 1650 nm and a bulk density from 0.09 g/cm$^3$ to 0.22 g/cm$^3$. The fiber aggregate for sound insulation satisfying these numerical ranges is capable of achieving lightness in weight and exhibiting effective sound insulating performance.

Fig. 8

EP 3 675 118 A1

**Description**

Technical Field

The present invention relates to a sound absorbing and insulating material and a sound absorbing and insulating material for a vehicle that have sound insulating performance and sound absorbing performance, and a fiber aggregate for sound insulation used for the same.

Background Art

Vehicles, such as automobiles and trains, are expected to be quiet for comfortable passenger transport. To achieve quietness, a material with a sound insulating effect and a sound absorption effect is embedded in vehicle walls and the like. Such a material is desirably lightweight from the perspective of energy conservation in transport. PTL 1, for example, discloses a sound absorbing material to address these problems.

The sound absorbing material in PTL 1 has nanofibers in the form of a nonwoven fabric in pores of a microfiber nonwoven fabric. Specifically, according to observation inside the microfiber nonwoven fabric of the sound absorbing material, the pores in the nonwoven fabric are divided by the nanofibers, and as a result, nanofiber nonwoven fabrics are formed in the pores.

Citation List

Patent Literature

PTL 1: JP 2017-181925 A

Summary of Invention

Technical Problem

The sound absorbing material described above is obtained by producing a microfiber nonwoven fabric, followed by impregnation with a nanofiber dispersion and drying, and has a complex structure where microfibers and nanofibers are entangled with each other. For reduction in production costs, it is desirable to achieve a satisfactory sound insulating effect and a satisfactory sound absorption effect by a simpler structure.

It is thus an object of the present invention to provide a fiber aggregate for sound insulation, capable of effectively insulating sound by a simple structure, and a sound absorbing and insulating material and a sound absorbing and insulating material for vehicles that have the fiber aggregate for sound insulation.

Solution to Problem

The present inventors focused on an average fiber diameter and a bulk density in an aggregate of fibers with a diameter on the order of nanometers or micrometers close to nanometers and repeated many tests on the relationship between combination of these parameters and the sound insulating performance for intensive investigation. As a result, they found an average fiber diameter and a bulk density allowing high level sound insulating performance to be exhibited particularly in a relatively low frequency range from 100 Hz to 2000 Hz approximately to complete the present invention.

To achieve the above object, a fiber aggregate for sound insulation according to an aspect of the present invention satisfies formulae (i) and (ii) below where the fiber aggregate for sound insulation has an average fiber diameter of Da and a bulk density of ρa.

(i) 450 nm $\leq$ Da $\leq$ 8500 nm
(ii) 0.09 g/cm$^3$ $\leq$ ρa $\leq$ 0.33 g/cm$^3$

The present invention preferably further satisfies a formula (i') below.

(i') 450 nm $\leq$ Da $\leq$ 1650 nm
The present invention preferably further satisfies a formula (ii') below.
(ii') 0.09 g/cm$^3$ $\leq$ ρa $\leq$ 0.22 g/cm$^3$
The present invention preferably further satisfies formulae (i") and (ii") below.
(i") 1350 nm $\leq$ Da $\leq$ 1650 nm

(ii") $0.18 \text{ g/cm}^3 \leq \text{pa} \leq 0.22 \text{ g/cm}^3$

To achieve the above object, a sound absorbing and insulating material according to another aspect of the present invention includes: a first fiber aggregate layer; and a second fiber aggregate layer superimposed on the first fiber aggregate layer, wherein the first fiber aggregate layer is composed of the fiber aggregate for sound insulation described above, the second fiber aggregate layer is composed of a fiber aggregate satisfying formulae (iii) and (iv) below where the fiber aggregate has an average fiber diameter of Db and a bulk density of pb.

(iii) $4000 \text{ nm} \leq \text{Db} \leq 8500 \text{ nm}$
(iv) $0.04 \text{ g/cm}^3 \leq \text{pb} \leq 0.06 \text{ g/cm}^3$

The present invention preferably further satisfies a formula (v) below where the first fiber aggregate layer has a thickness of ta and the second fiber aggregate layer has a thickness of tb.

(v) ta < tb
The present invention preferably further satisfies a formula (vi) below.
(vi) ta/tb ≤ 1/2

In the present invention, it is preferred that the first fiber aggregate layer and the second fiber aggregate layer are composed of an identical material.
To achieve the above object, a sound absorbing and insulating material for a vehicle according to an aspect of the present invention includes the sound absorbing and insulating material described above, wherein the first fiber aggregate layer is arranged on an outdoor side of the vehicle and the second fiber aggregate layer is arranged on an indoor side of the vehicle.

Advantageous Effects of Invention

The present invention enables effective sound insulation by a simple structure.
In addition, the present invention enables effective sound absorption by a simple structure.
Moreover, the present invention allows a sound absorbing and insulating material to be composed of different aggregate layers prepared with an identical material by an identical production device.

Brief Description of the Drawings

Figs. 1 are illustrations of a fiber aggregate for sound insulation according to an embodiment of the present invention.
Figs. 2 are diagrams illustrating a sound absorbing and insulating material according to another embodiment of the present invention.
Fig. 3 is a perspective illustrating an example of a production device used for preparation of the fiber aggregate.
Fig. 4 is a side view including a partial cross section of the production device in Fig. 3.
Fig. 5 is a front view of a collecting net for deposition of nanofibers the production device in Fig. 3.
Fig. 6 is a diagram schematically illustrating sound energy exerted on an object.
Fig. 7 is a diagram illustrating a measuring device used for evaluation of the fiber aggregate for sound insulation and the sound absorbing and insulating material of the present invention.
Fig. 8 is a graph illustrating relationship between frequency and transmission loss in Examples 1-1 through 1-4 of the present invention.
Fig. 9 is a graph illustrating relationship between frequency and transmission loss in Examples 1-5 through 1-8 of the present invention.
Fig. 10 is a graph illustrating relationship between frequency and transmission loss in Examples 1-9 through 1-12 of the present invention.
Fig. 11 is a graph illustrating relationship between frequency and transmission loss in Comparative Examples 1-1 through 1-3 of the present invention.
Figs. 12 are graphs illustrating relationship of frequency with transmission loss and absorption rate in Example 2-1 of the present invention.
Figs. 13 are graphs illustrating relationship of frequency with transmission loss and absorption rate in Example 2-2 of the present invention.
Figs. 14 are graphs illustrating relationship of frequency with transmission loss and absorption rate in Example 2-3 of the present invention.

Figs. 15 are graphs illustrating relationship of frequency with transmission loss and absorption rate in Example 2-4 of the present invention.

Figs. 16 are graphs illustrating relationship of frequency with transmission loss and absorption rate in Example 2-5 of the present invention.

Figs. 17 are graphs illustrating relationship of frequency with transmission loss and absorption rate in Example 2-6 of the present invention.

Figs. 18 are graphs illustrating relationship of frequency with transmission loss and absorption rate in Example 2-7 of the present invention.

Figs. 19 are graphs illustrating relationship of frequency with transmission loss and absorption rate in Example 2-8 of the present invention.

Figs. 20 are graphs illustrating relationship of frequency with transmission loss and absorption rate in Comparative Example 2-1 of the present invention.

Figs. 21 are graphs illustrating relationship of frequency with transmission loss and absorption rate in Comparative Example 2-2 of the present invention.

Figs. 22 are graphs illustrating relationship of frequency with transmission loss and absorption rate in Comparative Example 2-3 of the present invention.

Fig. 23 is a graph illustrating relationship between frequency and transmission loss in Examples 3-1 through 3-4 of the present invention.

Fig. 24 is a graph illustrating relationship between frequency and transmission loss in Examples 3-5 through 3-8 of the present invention.

Fig. 25 is a graph illustrating relationship between frequency and absorption coefficient in Examples 3-1 through 3-4 of the present invention.

Fig. 26 is a graph illustrating relationship between frequency and absorption coefficient in Examples 3-5 through 3-8 of the present invention.

Description of Embodiments

A fiber aggregate for sound insulation and a sound absorbing and insulating material according to respective embodiments of the present invention are described below.

Composition of Fiber Aggregate for Sound Insulation

The composition of a fiber aggregate for sound insulation in the present embodiment is described.

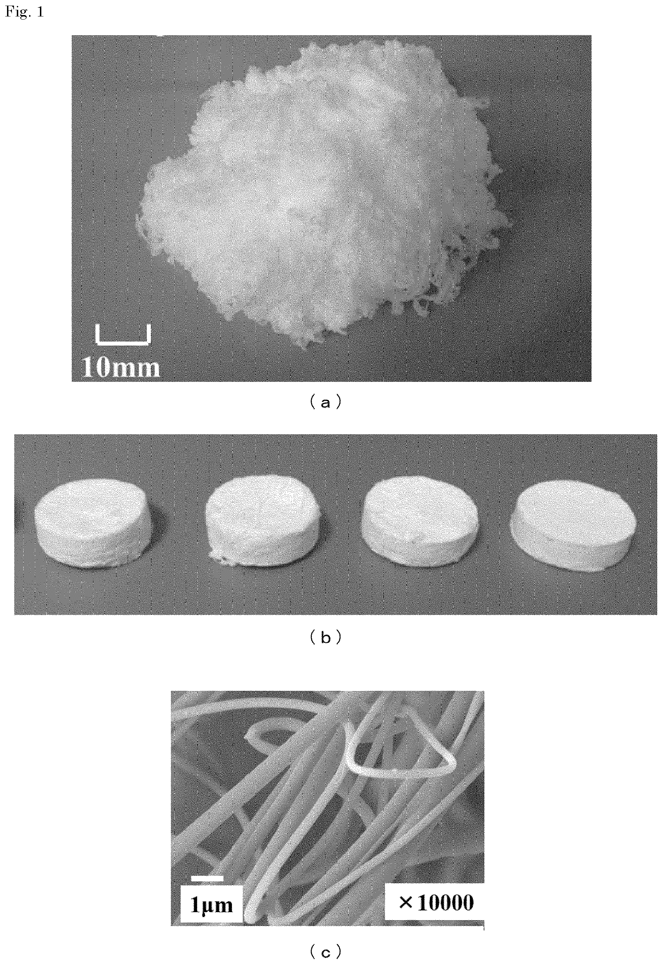

Figs. 1 are illustrations of a fiber aggregate for sound insulation according to an embodiment of the present invention. Specifically, Fig. 1A is a photograph of an example of fine fibers taken before formation. Fig. 1B is a photograph of an example of a fiber aggregate for sound insulation formed in a cylindrical shape. Fig. 1B illustrates a picture of four fiber aggregate for sound insulations. Fig. 1C is a photograph taken by enlarging an example of the fiber aggregate (average fiber diameter of 800 nm) with an electron microscope.

The fiber aggregate for sound insulation is composed by aggregating fine fibers with a fiber diameter on the order of nanometers or micrometers close to nanometers. The fiber aggregate for sound insulation in the present embodiment has an average fiber diameter from 450 nm to 5800 nm and a bulk density from 0.09 $g/cm^3$ to 0.33 $g/cm^3$. The fiber aggregate for sound insulation preferably has an average fiber diameter from 450 nm to 1650 nm and a bulk density from 0.09 $g/cm^3$ to 0.22 $g/cm^3$ for particularly excellent sound insulating performance. Moreover, the fiber aggregate for sound insulation most preferably has an average fiber diameter from 1350 nm to 1650 nm and a bulk density from 0.18 $g/cm^3$ to 0.22 $g/cm^3$. The fiber aggregate for sound insulation satisfying these numerical ranges is capable of achieving lightness in weight and exhibiting effective sound insulating performance.

The fiber aggregate for sound insulation is formed in, for example, a square mat shape. The fiber aggregate for sound insulation may be formed in a circular shape, a hexagonal shape, or the like other than a square shape and is formed in a shape in accordance with usage and the like, such as the shape of a site to be embedded.

In the present embodiment, the fine fibers to compose the fiber aggregate for sound insulation is constituted by a synthetic resin. Examples of the synthetic resin include polypropylene (PP), polyethylene terephthalate (PET), and the like. The fiber aggregate for sound insulation may be composed of a material other than them.

In particular, polypropylene is preferred as a material for the fiber aggregate for sound insulation because of the ease of handling and processing. The numerical values disclosed by raw material suppliers as the density (material density) of polypropylene range approximately from 0.85 to 0.95. The density of polypropylene used herein is 0.895 $g/cm^3$.

The fiber aggregate for sound insulation satisfies formulae (i) and (ii) below where the fiber aggregate for sound insulation has an average fiber diameter of Da and a bulk density of pa.

(i) 450 nm $\leq$ Da $\leq$ 8500 nm
(ii) 0.09 g/cm$^3$ $\leq$ $\rho$a $\leq$ 0.33g/cm$^3$

It is preferred that the fiber aggregate for sound insulation further satisfies a formula (i') below.

(i') 450 nm $\leq$ Da $\leq$ 1650 nm
It is preferred that the fiber aggregate for sound insulation further satisfies a formula (ii') below.
(ii') 0.09 g/cm$^3$ $\leq$ $\rho$a $\leq$ 0.22 g/cm$^3$
It is preferred that the fiber aggregate for sound insulation further satisfies formulae (i") and (ii") below.
(i") 1350 nm $\leq$ Da $\leq$ 1650 nm
(ii") 0.18 g/cm$^3$ $\leq$ $\rho$a $\leq$ 0.22 g/cm$^3$

The average fiber diameter is obtained as follows. In the fiber aggregate for sound insulation, a plurality of spots are arbitrarily selected and enlarged with an electron microscope. In each spot enlarged with the electron microscope, a plurality of fine fibers are arbitrarily selected to measure the diameters. The diameters of the selected fine fibers are then averaged to be defined as the average fiber diameter. In the present embodiment, five spots are arbitrarily selected in the fiber aggregate for sound insulation and 20 fine fibers are arbitrarily selected in each spot to measure the diameters. Then, the average of the diameters of these 100 fine fibers is defined as the average fiber diameter. The coefficient of variation (value obtained by dividing the standard deviation by the average) is preferably 0.6 or less.

While the fiber aggregate for sound insulation exhibits effective sound insulating performance, it is also applicable to a sound absorbing and insulating material described below.

Composition of Sound Absorbing and Insulating Material

The composition of the sound absorbing and insulating material in the present embodiment is described.

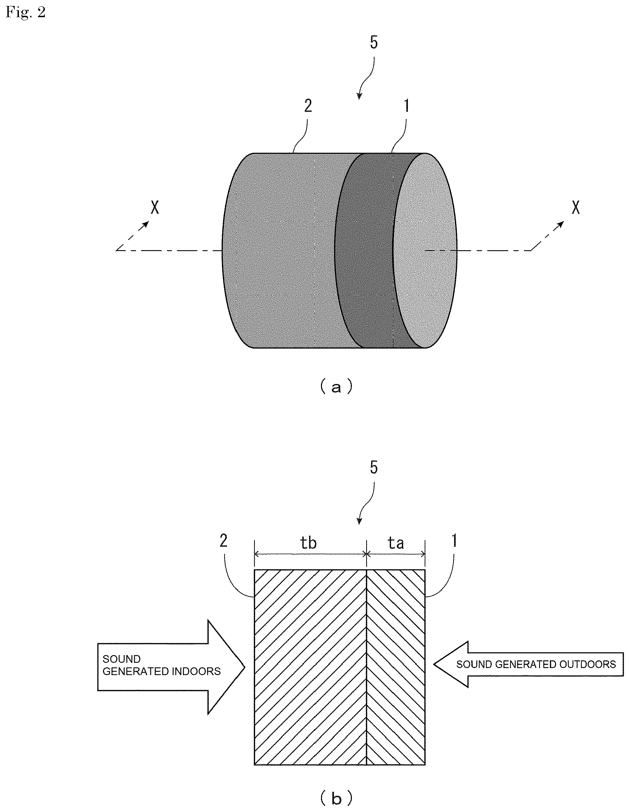

Figs. 2 are diagrams illustrating a sound absorbing and insulating material according to another embodiment of the present invention. Fig. 2A is a perspective of the sound absorbing and insulating material, and Fig. 2B is a cross-sectional view taken along line X-X in Fig. 2A.

T sound absorbing and insulating material 5 illustrated in Figs. 2 is a sound absorbing and insulating material for vehicles to be embedded in walls of vehicles, such as automobiles and trains. In addition to this application, it is also useful as a sound absorbing and insulating material to be embedded in walls of aircrafts and buildings, such as houses.

The sound absorbing and insulating material 5 has a first fiber aggregate layer 1 and a second fiber aggregate layer 2 superimposed on the first fiber aggregate layer 1. The first fiber aggregate layer 1 is composed of the fiber aggregate for sound insulation described above.

The second fiber aggregate layer 2 is composed of a fiber aggregate. The fiber aggregate to compose the second fiber aggregate layer 2 (hereinafter, referred to as a "fiber aggregate for sound absorption") is composed by aggregating fine fibers with a fiber diameter on the order of micrometers close to nanometers. The fiber aggregate for sound absorption has an average fiber diameter from 4000 nm to 8500 nm. The fiber aggregate for sound absorption has a bulk density from 0.04 g/cm$^3$ to 0.06 g/cm$^3$. The fiber aggregate for sound absorption satisfying these numerical ranges is capable of achieving lightness in weight and exhibiting effective sound absorbing performance.

In the present embodiment, the fine fibers to compose the fiber aggregate for sound absorption is constituted by a synthetic resin. Examples of the synthetic resin include polypropylene (PP), polyethylene terephthalate (PET), and the like. the fiber aggregate for sound absorption may be composed of a material other than them. The fiber aggregate for sound absorption to compose the second fiber aggregate layer 2 and the fiber aggregate for sound insulation to compose the first fiber aggregate layer 1 are preferably composed of an identical material (e.g., polypropylene). Use of the identical material for them allows constitution of the first fiber aggregate layer 1 and the second fiber aggregate layer 2 by a single material and thus reduction in production costs.

The fiber aggregate for sound absorption satisfies formulae (iii) and (iv) below where the fiber aggregate for sound absorption has an average fiber diameter of Db and a bulk density of pb.

(iii) 4000 nm $\leq$ Db $\leq$ 8500 nm
(iv) 0.04 g/cm$^3$ $\leq$ $\rho$b $\leq$ 0.06 g/cm$^3$

It is preferred that the fiber aggregate for sound absorption further satisfies a formula (v) below where the first fiber aggregate layer 1 has a thickness of ta and the second fiber aggregate layer 2 has a thickness of tb.

(v) ta < tb
It is preferred that the fiber aggregate for sound absorption further satisfies a formula (vi) below.

(vi) ta/tb ≤ 1/2

The sound absorbing and insulating material 5 is formed in, for example, a square mat shape. The sound absorbing and insulating material 5 may be formed in a circular shape, a hexagonal shape, or the like other than a square shape and is formed in a shape in accordance with usage, such as the shape of a site to be embedded.

The sound absorbing and insulating material 5 is suitable for a sound absorbing and insulating material for vehicles. When used for a vehicle, the sound absorbing and insulating material 5 is desirably embedded in vehicle walls to arrange the first fiber aggregate layer 1 on an outdoor side of the vehicle and the second fiber aggregate layer 2 on an indoor side of the vehicle. Such arrangement allows effective absorption (sealing) of indoor sound of the vehicle (sound generated indoors) and effective blocking of sound entering indoors from outside the vehicle (sound generated outdoors).

Specifically, sound energy emitted from a sound source proceeds while effectively absorbed by the second fiber aggregate layer composed of relatively thick fibers at low density and the proceeding is hindered (blocked) by the first fiber aggregate layer composed of relatively fine fibers at high density. In addition, when proceeding towards the sound source side, the sound energy reflected on a surface (boundary surface) of the first fiber aggregate layer is further absorbed by the second fiber aggregate layer. It is thus assumed to allow more effective confinement of the sound inside.

Device and Method of Producing Fiber Aggregate

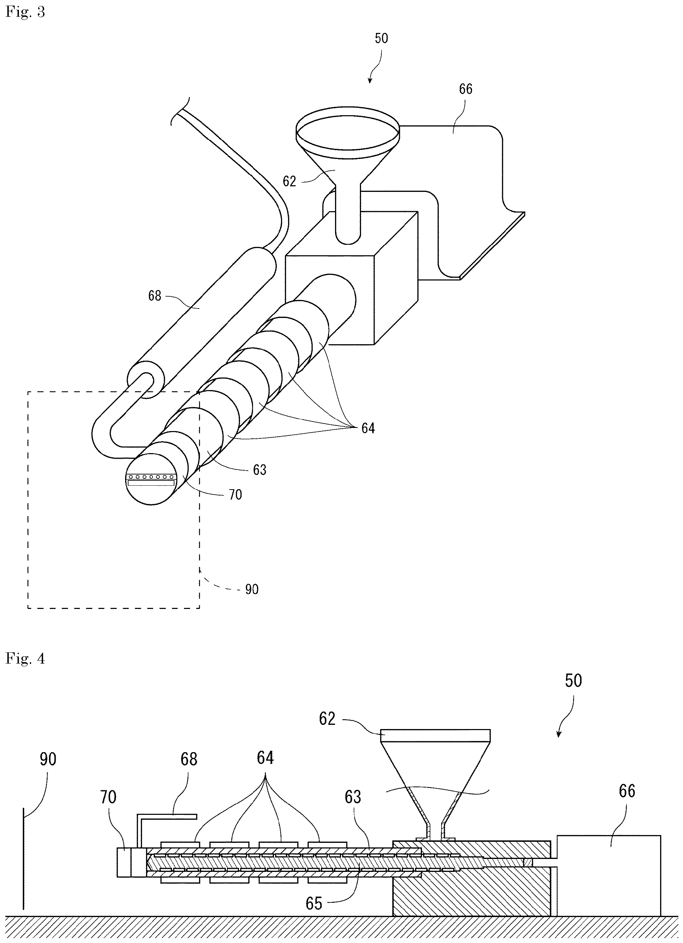

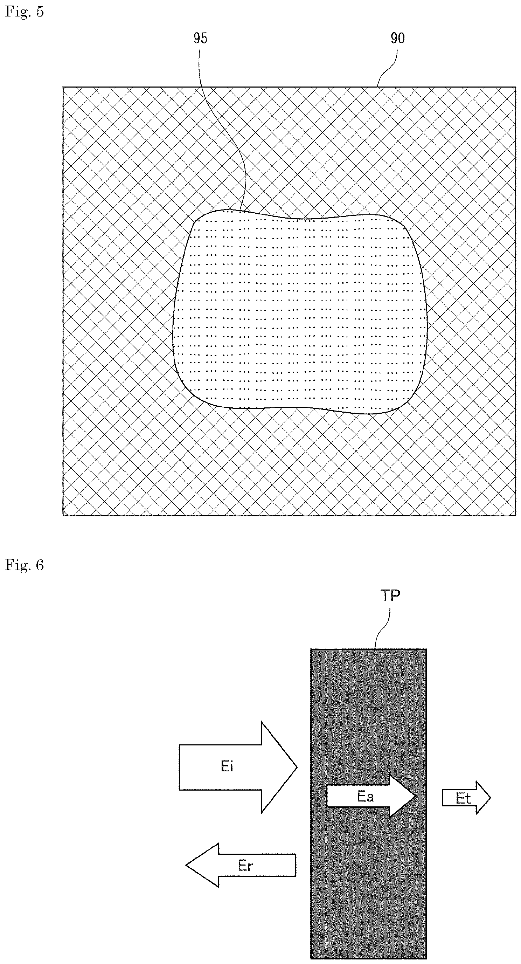

The fiber aggregate for sound insulation to compose the first fiber aggregate layer 1 of the sound absorbing and insulating material 5 and the fiber aggregate for sound absorption to compose the second fiber aggregate layer 2 are produced using a production device illustrated in Figs. 3 through 5. Fig. 3 is a perspective illustrating an example of a production device used for preparation of the fiber aggregate. Fig. 4 is a side view including a partial cross section of the production device in Fig. 3. Fig. 5 is a front view of a collecting net for deposition of finefine fibers by the production device in Fig. 3.

As illustrated in Figs. 3 and 4, a production device 50 has a hopper 62, a heating cylinder 63, heaters 64, a screw 65, a motor 66, and a head 70.

Into the hopper 62, a synthetic resin in the form of pellets is fed to be the material for the finefine fibers. The heating cylinder 63 is heated by the heaters 64 to melt the resin supplied from the hopper 62. The screw 65 is accommodated in the heating cylinder 63. The screw 65 is rotated by the motor 66 to deliver the molten resin to a distal end of the heating cylinder 63. The head 70 in a cylindrical shape is provided at the distal end of the heating cylinder 63. To the head 70, a gas supply section, not shown, is connected via a gas supply pipe 68. The gas supply pipe 68 is provided with a heater to heat high pressure gas supplied from the gas supply section. The head 70 injects the high pressure gas to the front and also discharges the molten resin so as to be carried on the high pressure gas flow. In front of the head 70, a collecting net 90 is arranged.

Now, operation of the production device 50 is described. The raw material (resin) in the form of pellets fed into the hopper 62 is supplied into the heating cylinder 63. The resin melted in the heating cylinder 63 is delivered to the distal end of the heating cylinder 63 by the screw 65. The molten resin (molten raw material) reaching the distal end of the heating cylinder 63 is discharged from the head 70. In coincidence with the discharge of the molten resin, high pressure gas is blown from the head 70.

The molten resin discharged from the head 70 intersects with the gas flow at a predetermined angle and is carried forward while being drawn. The drawn resin becomes finefine fibers to be aggregated, as illustrated in Fig. 5, on the collecting net 90 arranged in front of the head 70 (aggregation step). The aggregated finefine fibers 95 are then formed in a desired shape (e.g., square mat shape) (formation step). The fiber aggregate is thus obtained. The fiber aggregate thus obtained is formed simply by collecting the finefine fibers 95 on the collecting net 90 and does not require complex production steps, such as impregnating a microfiber nonwoven fabric with a nanofiber dispersion and drying, as described in PTL 1. Accordingly, the fiber aggregate in the present embodiment does not have a complex structure where microfibers and nanofibers are entangled with each other and has a simple structure where the finefine fibers 95 are randomly aggregated. The production device 50 is capable of producing fine fibers having different average fiber diameters by adjusting various parameters, such as a discharge rate of the molten resin, a blowing rate of the gas, and an angle at which the molten resin intersects with the gas flow. By adjusting the parameters in the single production device 50, it is thus possible to produce the fine fibers 95 to compose the first fiber aggregate layer 1 and the second fiber aggregate layer 2.

It should be noted that, although configured to discharge the "molten raw material" obtained by heating a synthetic resin to be a raw material to melt the resin, the above production device 50 is not limited to this configuration. In addition to this configuration, the production device 50 may be configured to, for example, discharge a "solvent" where a solid or liquid raw material as a solute is dissolved in advance at a predetermined concentration relative to a predetermined solvent. The present applicant discloses, as an example of a production device applicable to production of a fiber aggregate, a nanofiber production device and a nanofiber production method in Japanese Patent Application No. 2015-065171. The application was granted a patent (Japanese Patent No. 6047786, filed on March 26, 2015 and registered on December 2, 2016) and the present applicant holds the patent right.

Performance Evaluation

The present inventors evaluated the sound insulating performance and the sound absorbing performance (sealing performance) of the fiber aggregate for sound insulation and the sound absorbing and insulating material.
First, sound energy exerted on an object is investigated below.
As illustrated in Fig. 6, a formula (1) below is established when Ei denotes sound energy (incidence energy) incident on an object (sample TP), Er denotes sound energy (refrection energy) reflected on the object, Ea denotes sound energy (absorption energy) absorbed by the object, and Et denotes sound energy (transmission energy) transmitted through the object.
[Math 1]

$$E_i = E_r + E_a + E_t \cdots (1)$$

When focus is placed on the sound energy Er reflected on the object and a ratio of the sound energy not reflected on the object (i.e., the sound energy Ea absorbed by the object and the sound energy Et transmitted through the object) to the sound energy Ei incident on the object is defined as an absorption coefficient $\alpha$, a formula (2) below is established.
[Math 2]

$$\alpha = (E_a + E_t)/E_i = (E_i - E_r)/E_i \cdots (2)$$

When focus is placed on the sound energy Et transmitted through the object and a ratio of the sound energy Et transmitted through the object to the sound energy Ei incident on the object is defined as a transmittance $\tau$, a formula (3) below is established.
[Math 3]

$$\tau = E_t/E_i \cdots (3)$$

Where TL denotes transmission loss of the sound energy due to the object and is expressed in decibel, a formula (4) below is established. Higher transmission loss TL is considered to cause higher sound insulating performance.
[Math 4]

$$TL = 10 \log_{10}(1/\tau) = 10 \log_{10}(E_i/E_t) \quad [dB] \cdots (4)$$

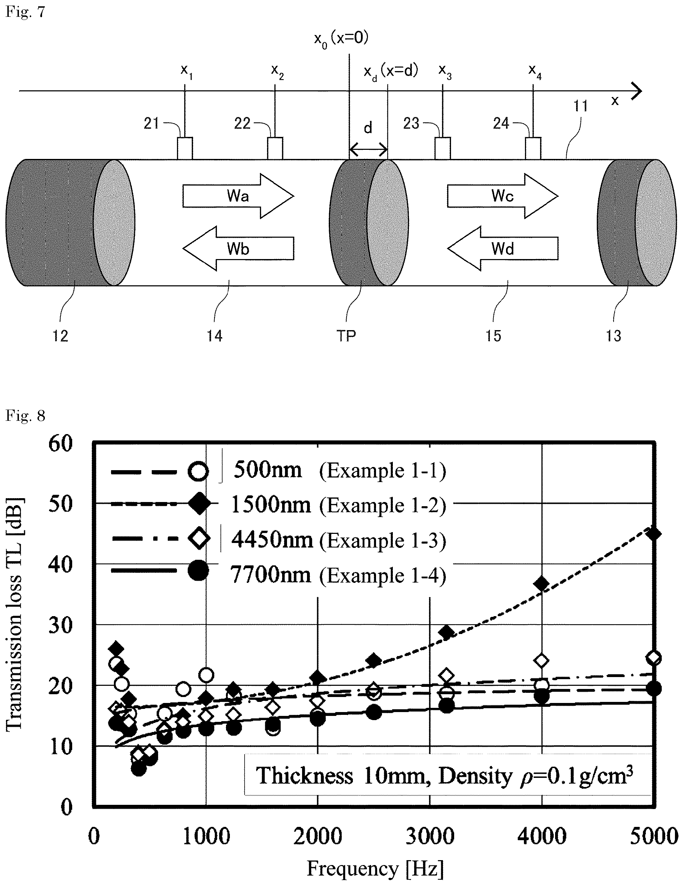

Using the absorption coefficient $\alpha$ and the transmission loss TL, it is possible to calculate an absorption rate $\beta$ ($\beta$ = Ea/Ei) as a ratio of the sound energy confined inside the object. Higher absorption rate $\beta$ is considered to cause higher sound absorbing performance.
Then, principles of measuring the absorption coefficient $\alpha$ and the transmission loss TL in the sample TP is described using a measuring device 10 illustrated in Fig. 7. As the measuring device 10, WinZac manufactured by Nihon Onkyo Engineering Co., Ltd. is used.
In the measuring device 10, a sound source 12 is arranged at one end (left end in Fig. 7) of a tubular body 11, a sound absorbing wall 13 is arranged at the other end (right end in Fig. 7), and the sample TP is arranged between the sound source 12 and the sound absorbing wall 13. The sample TP partitions inside the body 11 into an incident compartment 14 on the former end side and a transmission compartment 15 on the other end side. The incident compartment 14 and the transmission compartment 15 are hermetic. In the body 11, microphones 21 through 24 are embedded to allow measurement inside the incident compartment 14 and the transmission compartment 15.
In the measuring device 10, a sound wave $P_l$ incident on the sample TP is expressed by a formula (5) below.
[Math 5]

$$P_I = \hat{P}_I e^{jk_0 x} \cdots (5)$$

where $\hat{P}_I$ denotes an amplitude of the incident wave on the sample surface (x = 0)

A sound wave $P_R$ reflected on the sample TP is expressed by a formula (6) below.
[Math 6]

$$P_R = \hat{P}_R e^{-jk_0 x} \cdots (6)$$

where $\hat{P}_R$ denotes an amplitude of the reflected wave on the sample surface (x = 0)

In the formulae (5) and (6), $K_0$ denotes a complex wave and expressed by a formula (7) below.
[Math 7]

$$K_0 = K'_0 - jK''_0 \cdots (7)$$

The tubular body 11 has a sound field represented by the sum of the incident wave and the reflected wave. Accordingly, a sound pressure $P_1$ at the position $X_1$ of the microphone 21 and a sound pressure $P_2$ at the position $X_2$ of the microphone 22 are expressed by formulae (8) and (9) below.
[Math 8]

$$P_1 = \hat{P}_I e^{jk_0 x_1} + \hat{P}_R e^{-jk_0 x_1} \cdots (8)$$

[Math 9]

$$P_2 = \hat{P}_I e^{jk_0 x_2} + \hat{P}_R e^{-jk_0 x_2} \cdots (9)$$

In this situation, a transfer function $H_1$ between the microphones 21-22 in the presence of an incident wave is expressed by a formula (10) below.
[Math 10]

$$H_1 = \frac{P_{2,I}}{P_{1,I}} = e^{-jk_0(x_1 - x_2)} = e^{-jk_0 s} \cdots (10)$$

A transfer function $H_2$ between the microphones 21-22 in the presence of a reflected wave is expressed by a formula 11) below.
[Math 11]

$$H_R = \frac{P_{2,R}}{P_{1,R}} = e^{jk_0(x_1 - x_2)} = e^{jk_0 s} \cdots (11)$$

A transfer function $H_{12}$ between the two points of microphones 21-22 is then expressed by a formula (12) below.
[Math 12]

$$H_{12} = \frac{P_2}{P_1} = \frac{\hat{P}_I e^{jk_0 x_2} + \hat{P}_R e^{-jk_0 x_2}}{\hat{P}_I e^{jk_0 x_1} + \hat{P}_R e^{-jk_0 x_1}} = \frac{e^{jk_0 x_2} + r e^{-jk_0 x_2}}{e^{jk_0 x_1} + r e^{-jk_0 x_1}} \cdots (12)$$

Note that r in the above formula (12) denotes a complex sound pressure reflectance on the sample surface and is expressed by a formula (13) below.
[Math 13]

$$r = \frac{\hat{P}_R}{\hat{P}_I} \cdots (13)$$

The above formula is then rearranged to derive a formula (14) below.
[Math 14]

$$r = \frac{H_{12} - H_I}{H_R - H_{12}} e^{2jk_0 x_1} = r_r + jr_i \cdots (14)$$

Accordingly, an absorption coefficient $\alpha$ (normal incidence absorption coefficient) is expressed by a formula (15) below.
[Math 15]

$$\alpha = 1 - |r|^2 = 1 - r_r^2 + r_i^2 \cdots (15)$$

When a plane wave is incident on the sample TP, a portion of the wave is reflected on the surface of the sample TP and another portion of the wave transmits the sample TP. When random noise is incident from the sound source 12, a standing wave is generated in the body 11. The standing wave is superimposition of a progressive wave from the sound source 12 arranged at the one end towards the other end and a regressive wave from the other end towards the sound source 12. To identify the progressive wave and the regressive wave, the microphones 21 through 24 are mounted, two for each of the two compartments (incident compartment 14, transmission compartment 15) partitioned by the sample TP in the body 11. The incident wave as a progressive wave on the incident compartment 14 side close to the sound source 12 is defined as Wa, the reflected wave as a regressive wave is defined as Wb, the transmitted wave as a progressive wave on the transmission compartment 15 side distant from the sound source 12 is defined as Wc, and the reflected wave as a regressive wave is defined as Wd. A front surface sound pressure on the front surface $x_0$ ($x = 0$) of the sample TP is defined as Po, a front surface particle velocity is defined as $V_0$, a rear surface sound pressure on the rear surface $x_d$ ($x = d$) of the sample is defined as $P_d$, and a rear surface particle velocity is defined as $V_d$. Based on them, the sound pressures $P_1$ through $P_4$ at the positions $x_1$ through $x_4$ of the respective microphones 21 through 24 are expressed by a formula (16) below. A and B in the formula (16) are amplitudes A and B in formulae (17) and (18).
[Math 16]

$$P_n = \left[ Ae^{-jkx_n} + Be^{jkx_n} \right] e^{jwt}, n = 1{\sim}4 \cdots (16)$$

Where amplitudes A and C of the incident wave Wa and the transmitted wave Wc as progressive waves and amplitudes B and D of the reflected waves Wb and Wd as regressive waves are represented by the sound pressures $P_1$ through $P_4$ at the positions $x_1$ through $x_4$ of the respective microphones 21 through 24, formulae (17) and (20) below are established.
[Math 17]

$$A = \frac{j\left(P_1 e^{jkx_2} - P_2 e^{jkx_1}\right)}{2 \sin k(x_1 - x_2)} \cdots (17)$$

[Math 18]

$$B = \frac{j\left(P_2 e^{-jkx_1} - P_1 e^{-jkx_2}\right)}{2 \sin k(x_1 - x_2)} \cdots (18)$$

[Math 19]

$$C = \frac{j\left(P_3 e^{jkx_4} - P_4 e^{jkx_3}\right)}{2 \sin k(x_3 - x_4)} \cdots (19)$$

[Math 20]

$$D = \frac{j\left(P_4 e^{-jkx_3} - P_3 e^{-jkx_4}\right)}{2\sin k(x_3 - x_4)} \cdots (20)$$

From the above formulae (12) and (16) through (20), when a transmission constant T is represented by transfer functions H12, H13, and H34, a formula (21) below is established.

$$
\begin{aligned}
T = \frac{A}{C} &= \frac{\dfrac{j\left(P_3 e^{jkx_4} - P_4 e^{jkx_3}\right)}{2\sin k\,(x_3 - x_4)}}{\dfrac{j\left(P_1 e^{jkx_2} - P_2 e^{jkx_1}\right)}{2\sin k(x_1 - x_2)}} \\
&= \frac{\sin ks_1}{\sin ks_2}\frac{P_3 e^{jkx_4} - P_4 e^{jkx_3}}{P_1 e^{jkx_2} - P_2 e^{jkx_1}} \\
&= \frac{\sin ks_1}{\sin ks_2}\frac{e^{jkx_4} - H_{34}e^{jkx_3}}{e^{jkx_2} - H_{12}e^{jkx_1}}H_{13} \\
&= \frac{\sin ks_1}{\sin ks_2}\frac{e^{jks_2} - H_{34}}{e^{jks_1} - H_{12}}e^{jk(x_3 - x_1)}H_{13} \cdots (21)
\end{aligned}
$$

Accordingly, from the transmission constant T, transmission loss TL (normal incidence transmission loss) is expressed by a formula (22) below.
[Math 22]

$$TL = 10\log_{10}(1/\tau)\ wherein\ transmittance\ (\tau = |T|^2) \cdots (22)$$

Then, as expressed in a formula (23) below, it is possible to calculate the absorption rate β as a ratio of the sound energy confined in the sample TP by subtracting the transmittance τ from the absorption coefficient α.
[Math 23]

$$\beta = \alpha - \tau \cdots (23)$$

Evaluation of Fiber Aggregate for Sound Insulation

The present inventors then prepared Examples 1-1 through 1-12 of the fiber aggregate for sound insulation according to the present invention and Comparative Examples 1-1 through 1-3 described below to verify their sound insulating performance.
First, using the production device 50 described above, fine fibers 95 with average fiber diameters of 500 nm, 1500 nm, 4450 nm, and 7700 nm were produced using polypropylene as the material. The standard deviation of the fiber diameter was 900 and the coefficient of variation was 0.60 that was obtained by dividing the standard deviation by the average fiber diameter. Examples 1-1 through 1-12 of the cylindrical fiber aggregate for sound insulation were prepared to have combinations of the average fiber diameter and the bulk density as described below. In addition, Comparative Examples 1-1 through 1-3 were prepared using commercially available materials.

Example 1-1

A fiber aggregate for sound insulation of the fine fibers 95 described above formed in a cylindrical shape with an average fiber diameter of 500 nm, a bulk density of 0.1 g/cm$^3$, and a height (thickness) of 10 mm.

Example 1-2

A fiber aggregate for sound insulation of the fine fibers 95 described above formed in a cylindrical shape with an average fiber diameter of 1500 nm, a bulk density of 0.1 g/cm$^3$, and a height of 10 mm.

Example 1-3

A fiber aggregate for sound insulation of the fine fibers 95 described above formed in a cylindrical shape with an average fiber diameter of 4450 nm, a bulk density of 0.1 g/cm$^3$, and a height of 10 mm.

Example 1-4

A fiber aggregate for sound insulation of the fine fibers 95 described above formed in a cylindrical shape with an average fiber diameter of 7700 nm, a bulk density of 0.1 g/cm$^3$, and a height of 10 mm.

Example 1-5

A fiber aggregate for sound insulation of the fine fibers 95 described above formed in a cylindrical shape with an average fiber diameter of 500 nm, a bulk density of 0.2 g/cm$^3$, and a height of 10 mm.

Example 1-6

A fiber aggregate for sound insulation of the fine fibers 95 described above formed in a cylindrical shape with an average fiber diameter of 1500 nm, a bulk density of 0.2 g/cm$^3$, and a height of 10 mm.

Example 1-7

A fiber aggregate for sound insulation of the fine fibers 95 described above formed in a cylindrical shape with an average fiber diameter of 4450 nm, a bulk density of 0.2 g/cm$^3$, and a height of 10 mm.

Example 1-8

A fiber aggregate for sound insulation of the fine fibers 95 described above formed in a cylindrical shape with an average fiber diameter of 7700 nm, a bulk density of 0.2 g/cm$^3$, and a height of 10 mm.

Example 1-9

A fiber aggregate for sound insulation of the fine fibers 95 described above formed in a cylindrical shape with an average fiber diameter of 500 nm, a bulk density of 0.3 g/cm$^3$, and a height of 10 mm.

Example 1-10

A fiber aggregate for sound insulation of the fine fibers 95 described above formed in a cylindrical shape with an average fiber diameter of 1500 nm, a bulk density of 0.3 g/cm$^3$, and a height of 10 mm.

Example 1-11

A fiber aggregate for sound insulation of the fine fibers 95 described above formed in a cylindrical shape with an average fiber diameter of 4450 nm, a bulk density of 0.3 g/cm$^3$, and a height of 10 mm.

Example 1-12

A fiber aggregate for sound insulation of the fine fibers 95 described above formed in a cylindrical shape with an average fiber diameter of 7700 nm, a bulk density of 0.3 g/cm$^3$, and a height of 10 mm.

Comparative Example 1-1

A sound absorbing material of a commercially available felt material (trade name: sound absorbing material

[2177], Amon Industry Co., Ltd., wool) formed in a cylindrical shape with a bulk density of 0.1 g/cm$^3$ and a height of 10 mm.

Comparative Example 1-2

A sound absorbing material of a commercially available urethane foam material (trade name: sound absorbing material [2176], Amon Industry Co., Ltd., soft urethane foam) formed in a cylindrical shape with a bulk density of 0.1 g/cm$^3$ and a height of 10 mm.

Comparative Example 1-3

A sound absorbing material of a commercially available polyester nonwoven fabric material (trade name: White Kyuon [ESW-10-303], Tokyo Bouon Co., Ltd., average fiber diameter of 20 $\mu$m) formed in a cylindrical shape with a bulk density of 0.1 g/cm$^3$ and a height of 10 mm.

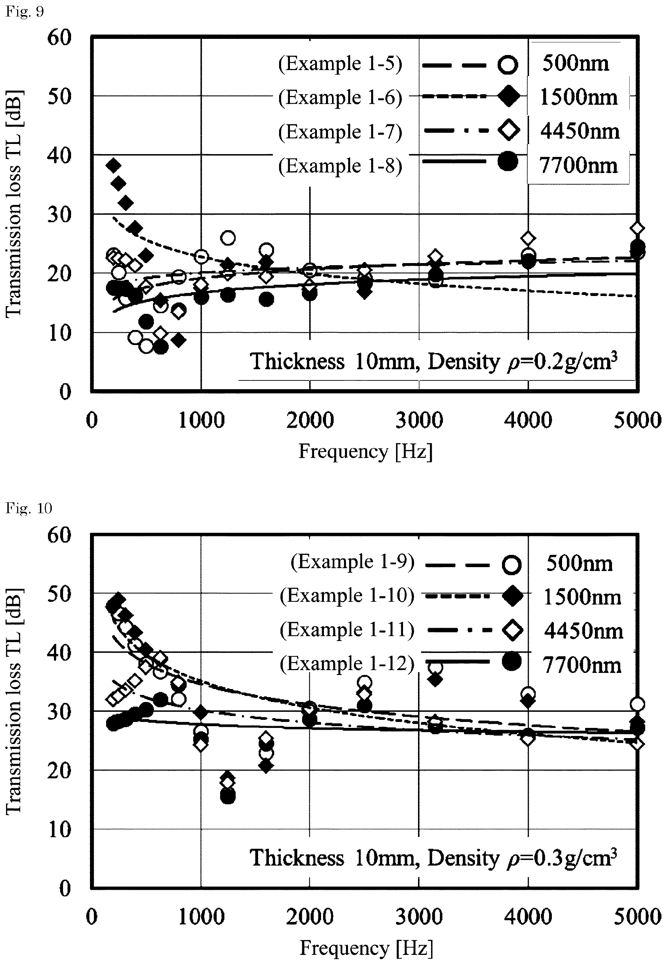

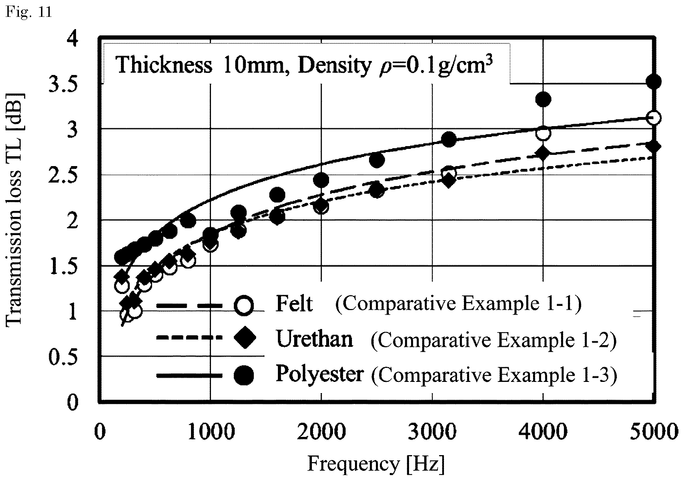

For Examples 1-1 through 1-12 and Comparative Examples 1-1 through 1-3 described above, the transmission loss TL was measured using the measuring device 10 described above. Fig. 8 illustrates the transmission loss TL in Examples 1-1 through 1-4, Fig. 9 illustrates the transmission loss TL in Examples 1-5 through 1-8, Fig. 10 illustrates the transmission loss TL in Examples 1-9 through 1-12, and Fig. 11 illustrates the transmission loss TL in Comparative Example 1-3.

The transmission loss TL in Examples 1-1 through 1-12 and Comparative Examples 1-1 through 1-3 was then evaluated based on evaluation criteria below. The compositions and the evaluation results in Examples 1-1 through 1-12 and Comparative Examples 1-1 through 1-3 are shown in Table 1.

Evaluation Criteria of Transmission Loss TL

Fair: The transmission loss TL is 5 dB or more in the frequency range of 5000 Hz or less.

Poor: A frequency with the transmission loss TL of less than 5 dB was found in the frequency range of 5000 Hz or less.

[Table 1]

| | Average Fiber Diameter | Bulk Density | Height (Thickness) | Transmission Loss Evaluation |
|---|---|---|---|---|
| Example 1-1 | 500 nm | 0.1 g/cm$^3$ | 10 mm | Fair |
| Example 1-2 | 1500 nm | 0.1 g/cm$^3$ | 10 mm | Fair |
| Example 1-3 | 4450 nm | 0.1 g/cm$^3$ | 10 mm | Fair |
| Example 1-4 | 7700 nm | 0.1 g/cm$^3$ | 10 mm | Fair |
| Example 1-5 | 500 nm | 0.2 g/cm$^3$ | 10 mm | Fair |
| Example 1-6 | 1500 nm | 0.2 g/cm$^3$ | 10 mm | Fair |
| Example 1-7 | 4450 nm | 0.2 g/cm$^3$ | 10 mm | Fair |
| Example 1-8 | 7700 nm | 0.2 g/cm$^3$ | 10 mm | Fair |
| Example 1-9 | 500 nm | 0.3 g/cm$^3$ | 10 mm | Fair |
| Example 1-10 | 1500 nm | 0.3 g/cm$^3$ | 10 mm | Fair |
| Example 1-11 | 4500 nm | 0.3 g/cm$^3$ | 10 mm | Fair |
| Example 1-12 | 7700 nm | 0.3 g/cm$^3$ | 10 mm | Fair |
| Comparative Example 1-1 | - | 0.1 g/cm$^3$ | 10 mm | Poor |
| Comparative Example 1-2 | - | 0.1 g/cm$^3$ | 10 mm | Poor |
| Comparative Example 1-3 | 20 $\mu$m | 0.1 g/cm$^3$ | 10 mm | Poor |

As clearly seen from Figs. 8 through 10, the transmission loss TL in Examples 1-1 through 1-12 was 5 dB or more in the entire frequency range of 5000 Hz or less. In contrast, as clearly seen from Fig. 11, the transmission loss TL in Comparative Examples 1-1 through 1-3 was less than 5 dB in the entire frequency range of 5000 Hz or less and Comparative Examples 1-1 through 1-3 are not capable of exhibiting sufficient sound insulating performance.

In addition, as illustrated in Figs. 8 through 10, it is understood from Examples 1-1 through 1-12 that a higher bulk density tends to cause higher transmission loss TL (i.e., sound insulating performance) and a lower bulk density tends to cause lower transmission loss TL. From the perspective of transmission loss TL, a higher bulk density is advantageous while causing an increase in weight accordingly. In comparison between Examples 1-1 through 1-4 (bulk density of 0.1 g/cm$^3$) and Examples 1-8 through 1-12 (bulk density of 0.3 g/cm$^3$), the latter is weighed three times the weight of the former for the same volume. Meanwhile, a lower bulk density causes low transmission loss TL and does not allow sufficient sound insulating performance to be secured. From these points, an appropriate bulk density for the fiber aggregate for sound insulation is considered to be approximately from 0.1 g/cm$^3$ to 0.2 g/cm$^3$ from the perspective of the balance between the transmission loss TL and the weight.

Still in addition, as clearly seen from Figs. 8 and 9, Examples 1-1 through 1-8 with bulk densities of 0.1 g/cm$^3$ and 0.2 g/cm$^3$ have a tendency that those with a finer average fiber diameter (500 nm, 1500 nm) generally have higher transmission loss TL than those with a thicker average fiber diameter (4450 nm, 7700 nm). Particularly in low-frequency sound approximately from 100 Hz to 300 Hz, those with a finer average fiber diameter (500 nm, 1500 nm) are more satisfactory and most satisfactory transmission loss TL was exhibited around an average fiber diameter of 1500 nm.

From the above results, it was confirmed that the fiber aggregates for sound insulation with an average fiber diameter approximately from 500 nm to 7700 nm and a bulk density approximately from 0.1 g/cm$^3$ to 0.3 g/cm$^3$ exhibited satisfactory sound insulating performance. It was also confirmed that the fiber aggregates for sound insulation with an average fiber diameter approximately from 500 nm to 1500 nm and a bulk density approximately from 0.1 g/cm$^3$ to 0.2 g/cm$^3$ exhibited particularly satisfactory sound insulating performance. Moreover, it was confirmed that the fiber aggregates for sound insulation with an average fiber diameter of approximately 1500 nm and a bulk density of approximately 0.2 g/cm$^3$ exhibited most satisfactory sound insulating performance.

Evaluation of Sound Absorbing and Insulating Material

The present inventors then prepared Examples 2-1 through 2-8 of the sound absorbing and insulating material according to the present invention and Comparative Examples 2-1 through 2-3 described below to verify their sound insulating performance and their sound absorbing performance.

First, using the production device 50 described above, fine fibers 95 with average fiber diameters of 800 nm, 1500 nm, 4450 nm, and 7700 nm were produced using polypropylene as the material. The standard deviation of the fiber diameter was 900 and the coefficient of variation was 0.60 that was obtained by dividing the standard deviation by the average fiber diameter. Examples 2-1 through 2-8 of the sound absorbing and insulating material and Comparative Examples 2-1 through 2-3 were prepared as described below.

Example 2-1

A sound absorbing and insulating material composed by superimposing a first fiber aggregate layer of the fine fibers 95 described above formed in a cylindrical shape with an average fiber diameter of 800 nm, a bulk density of 0.2 g/cm$^3$, and a height (thickness) of 20 mm on a second fiber aggregate layer formed in a cylindrical shape with an average fiber diameter of 4450 nm, a bulk density of 0.05 g/cm$^3$, and a height (thickness) of 10 mm.

Example 2-2

A sound absorbing and insulating material composed by superimposing a first fiber aggregate layer of the fine fibers 95 described above formed in a cylindrical shape with an average fiber diameter of 800 nm, a bulk density of 0.2 g/cm$^3$, and a height of 15 mm on a second fiber aggregate layer formed in a cylindrical shape with an average fiber diameter of 4450 nm, a bulk density of 0.05 g/cm$^3$, and a height of 15 mm.

Example 2-3

A sound absorbing and insulating material composed by superimposing a first fiber aggregate layer of the fine fibers 95 described above formed in a cylindrical shape with an average fiber diameter of 800 nm, a bulk density of 0.2 g/cm$^3$, and a height of 10 mm on a second fiber aggregate layer formed in a cylindrical shape with an average fiber diameter of 4450 nm, a bulk density of 0.05 g/cm$^3$, and a height of 20 mm.

Example 2-4

A sound absorbing and insulating material composed by superimposing a first fiber aggregate layer of the fine fibers 95 described above formed in a cylindrical shape with an average fiber diameter of 800 nm, a bulk density of 0.1 g/cm$^3$, and a height of 10 mm on a second fiber aggregate layer formed in a cylindrical shape with an average fiber diameter of 4450 nm, a bulk density of 0.05 g/cm$^3$, and a height of 20 mm.

Example 2-5

A sound absorbing and insulating material composed by superimposing a first fiber aggregate layer of the fine fibers 95 described above formed in a cylindrical shape with an average fiber diameter of 1500 nm, a bulk density of 0.2 g/cm$^3$, and a height of 10 mm on a second fiber aggregate layer formed in a cylindrical shape with an average fiber diameter of 4450 nm, a bulk density of 0.05 g/cm$^3$, and a height of 20 mm.

Example 2-6

A sound absorbing and insulating material composed by superimposing a first fiber aggregate layer of the fine fibers 95 described above formed in a cylindrical shape with an average fiber diameter of 800 nm, a bulk density of 0.2 g/cm$^3$, and a height of 10 mm on a second fiber aggregate layer formed in a cylindrical shape with an average fiber diameter of 7700 nm, a bulk density of 0.05 g/cm$^3$, and a height of 20 mm.

Example 2-7

A sound absorbing and insulating material composed by superimposing a first fiber aggregate layer of the fine fibers 95 described above formed in a cylindrical shape with an average fiber diameter of 800 nm, a bulk density of 0.1 g/cm$^3$, and a height of 10 mm on a second fiber aggregate layer formed in a cylindrical shape with an average fiber diameter of 7700 nm, a bulk density of 0.05 g/cm$^3$, and a height of 20 mm.

Example 2-8

A sound absorbing and insulating material composed by superimposing a first fiber aggregate layer of the fine fibers 95 described above formed in a cylindrical shape with an average fiber diameter of 1500 nm, a bulk density of 0.2 g/cm$^3$, and a height of 10 mm on a second fiber aggregate layer formed in a cylindrical shape with an average fiber diameter of 7700 nm, a bulk density of 0.05 g/cm$^3$, and a height of 20 mm.

Comparative Example 2-1

A monolayer structured sound absorbing and insulating material of the fine fibers 95 described above formed in a cylindrical shape with an average fiber diameter of 4450 nm, a bulk density of 0.05 g/cm$^3$, and a height of 30 mm.

Comparative Example 2-2

A monolayer structured sound absorbing and insulating material of the fine fibers 95 described above formed in a cylindrical shape with an average fiber diameter of 800 nm, a bulk density of 0.2 g/cm$^3$, and a height of 30 mm.

Comparative Example 2-3

A sound absorbing and insulating material composed by superimposing a first fiber aggregate layer of the fine fibers 95 described above formed in a cylindrical shape with an average fiber diameter of 4450 nm, a bulk density of 0.05 g/cm$^3$, and a height of 10 mm on a second fiber aggregate layer formed in a cylindrical shape with an average fiber diameter of 800 nm, a bulk density of 0.2 g/cm$^3$, and a height of 20 mm.

In Examples 2-1 through 2-8, the first fiber aggregate layer was composed of the relatively fine fibers at high density and the second fiber aggregate layer was composed of the relatively thick fibers at low density. In Example 2-1, the first fiber aggregate layer was configured to have a height higher than the height of the second fiber aggregate layer. In Example 2-2, the first fiber aggregate layer was configured to have a height identical to the height of the second fiber aggregate layer. In Examples 2-3 through 2-8, the first fiber aggregate layer was configured to have a height lower than the height of the second fiber aggregate layer and the ratio was 1:2. Comparative Examples 2-1 and 2-2 had a monolayer structure only having the first fiber aggregate layer. In Comparative Example 2-3, the first fiber aggregate layer was composed of the relatively thick fibers at low density and the second fiber aggregate layer was composed of the relatively fine fibers at high density, and Comparative Example 2-3 specifically had a configuration exchanging the first fiber aggregate layer and the second fiber aggregate layer in Example 2-1.

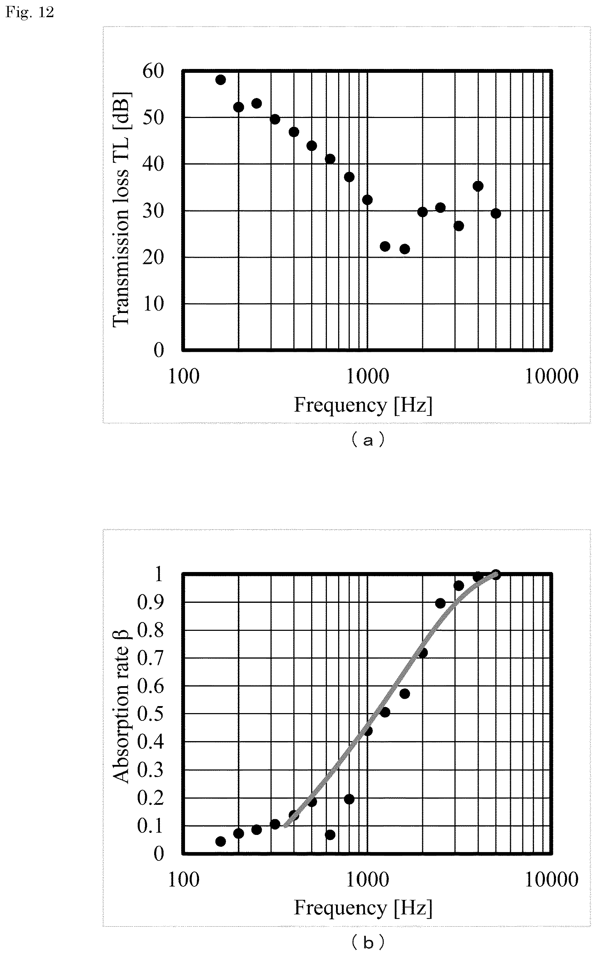

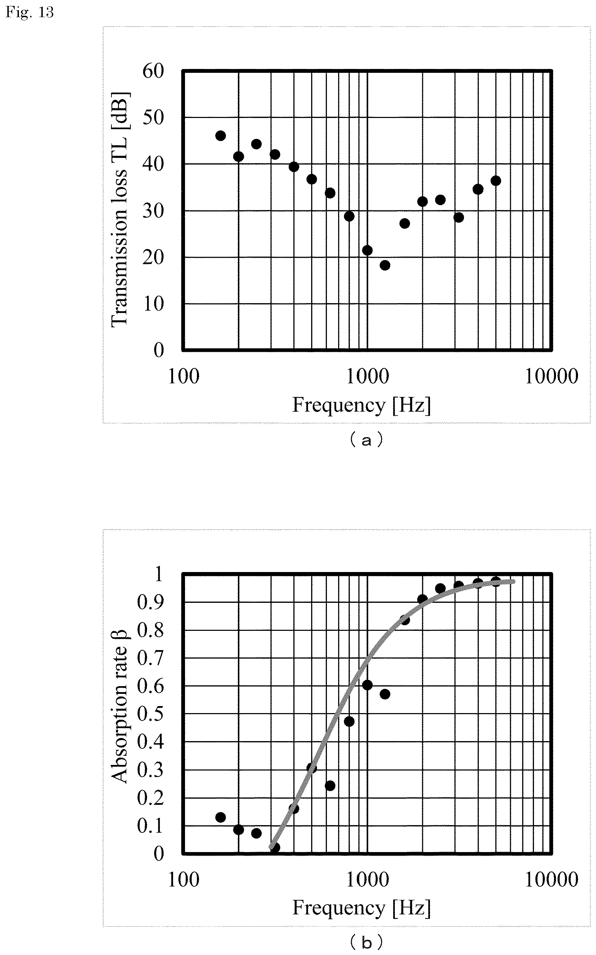

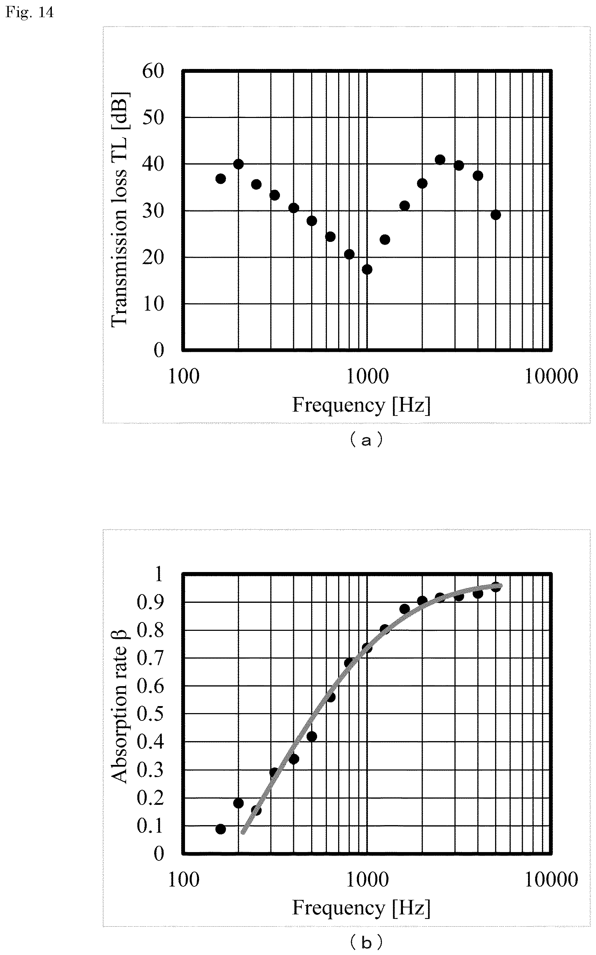

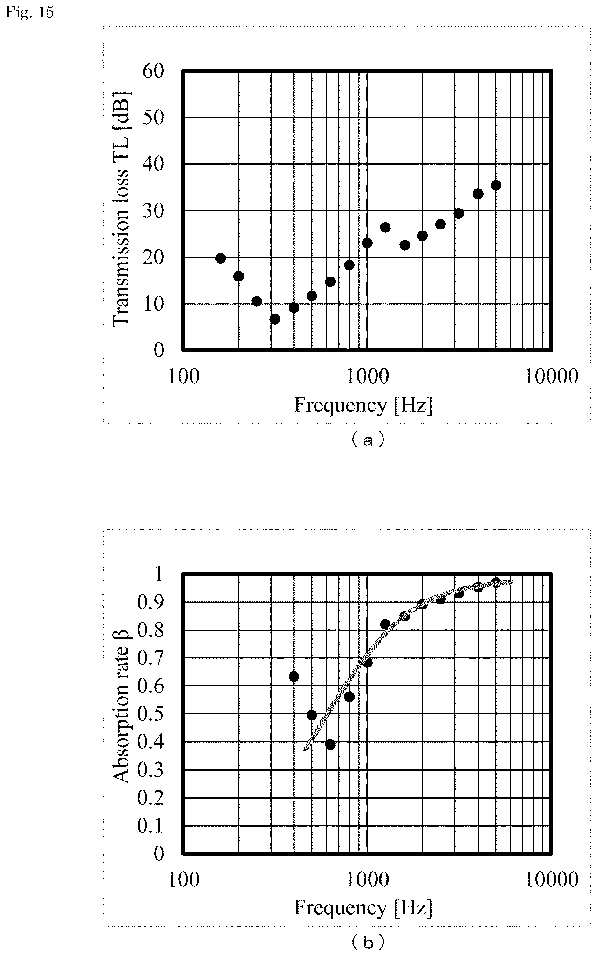

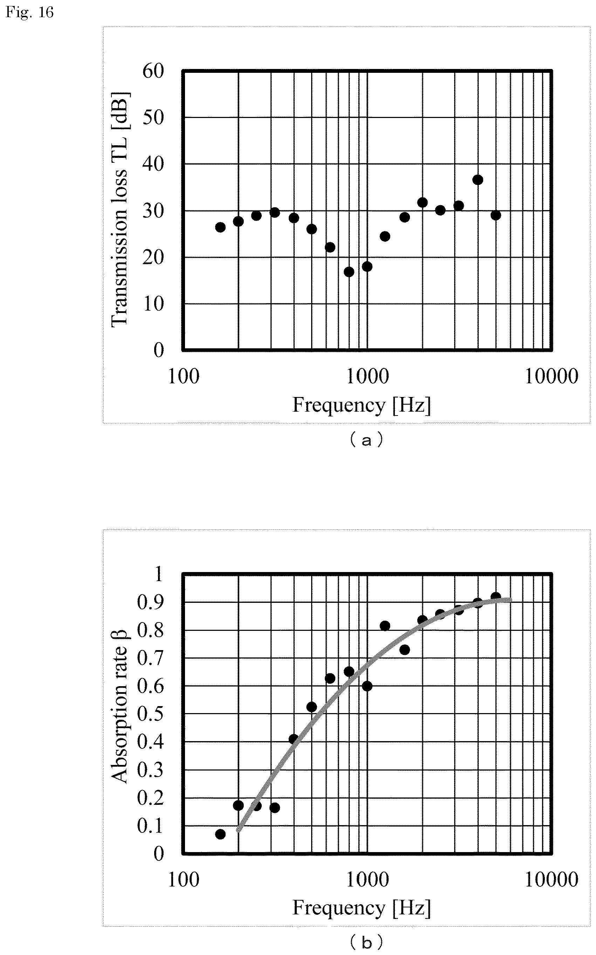

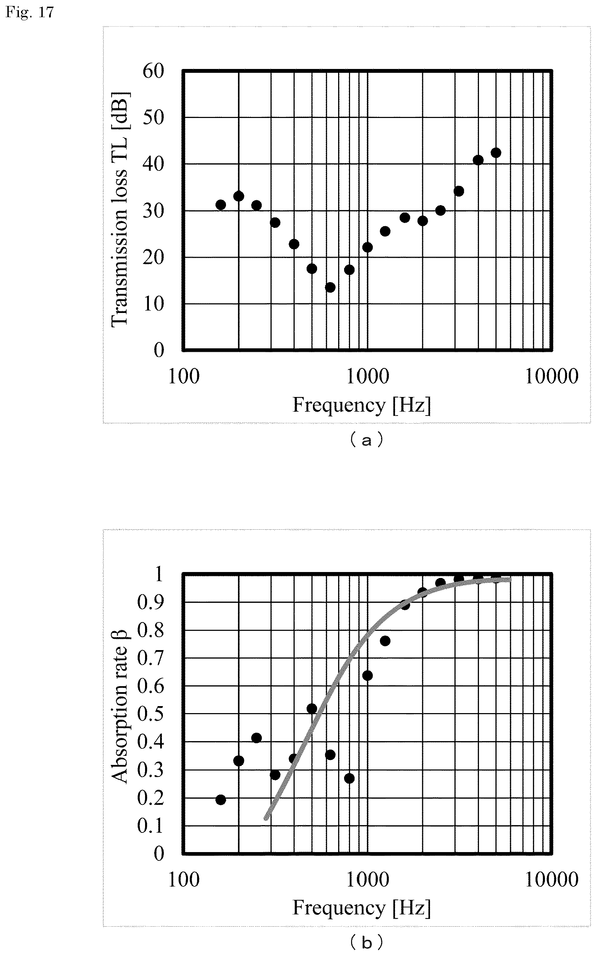

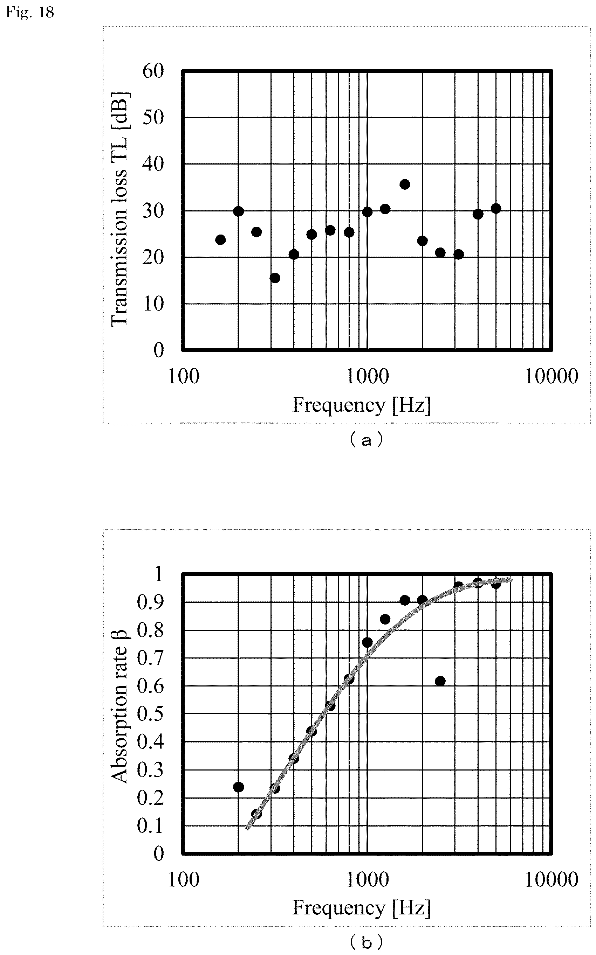

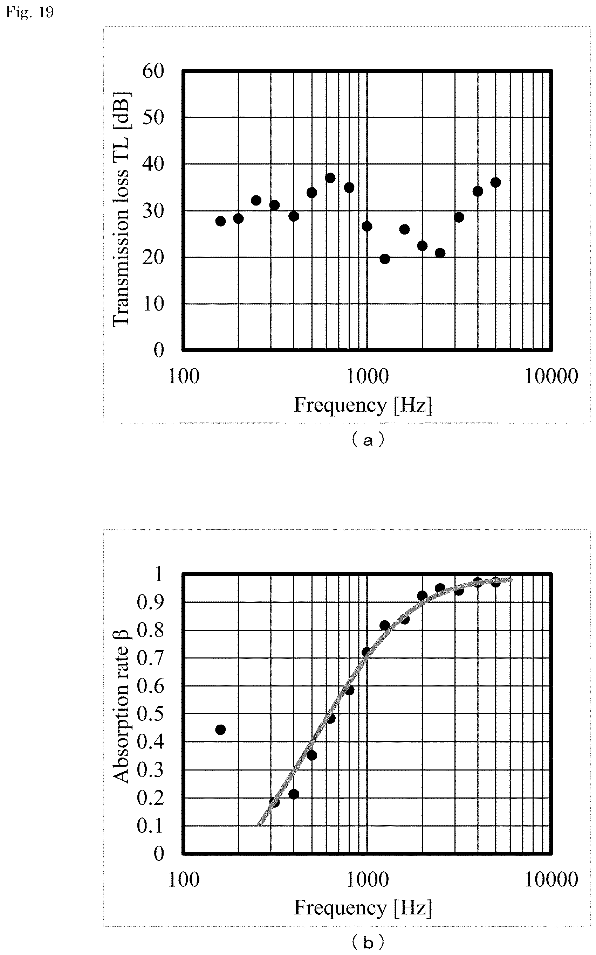

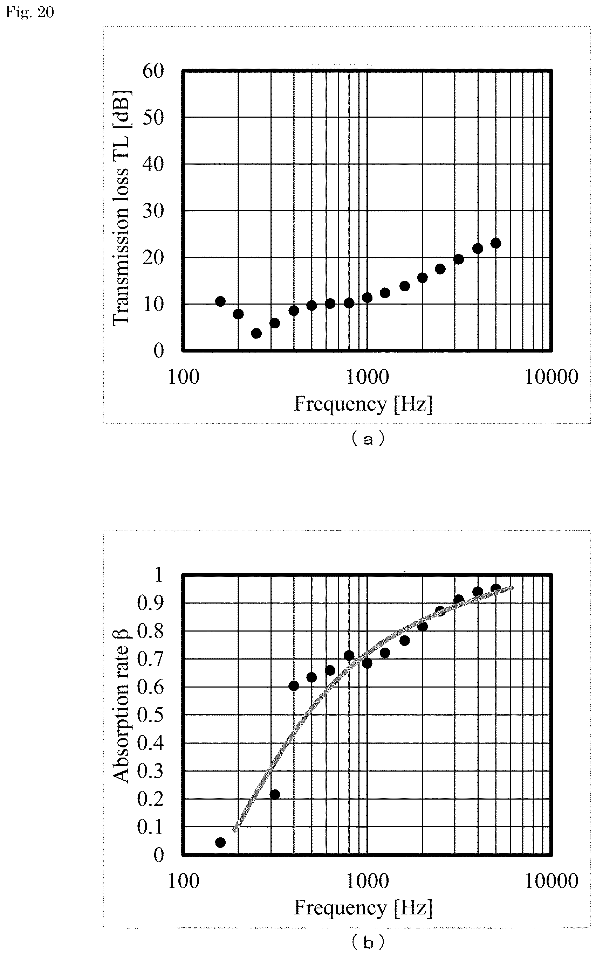

For Examples 2-1 through 2-8 and Comparative Examples 2-1 through 2-3 described above, the absorption coefficient $\alpha$ and the transmission loss TL were measured using the measuring device 10 described above. Then, using the absorption coefficient $\alpha$ and the transmission loss TL, the absorption rate $\beta$ was calculated. Figs. 12 through 19 illustrate the transmission loss TL and the absorption rate $\beta$ in Examples 2-1 through 2-8, and Figs. 20 through 22 illustrate the transmission loss TL and the absorption rate $\beta$ in Comparative Examples 2-1 through 2-3. In each of these drawings, A illustrates the relationship between frequency and transmission loss TL and B illustrates the relationship between frequency and absorption rate $\beta$.

The transmission loss TL and the absorption rate $\beta$ in Examples 2-1 through 2-8 and Comparative Examples 2-1 through 2-3 were then evaluated based on evaluation criteria below. The compositions and the evaluation results in Examples 2-1 through 2-8 and Comparative Examples 2-1 through 2-3 are shown in Table 2.

Evaluation Criteria of Transmission Loss TL

Good: The transmission loss TL is 15 dB or more in the frequency range of 5000 Hz or less.
Fair: The transmission loss TL is 5 dB or more and less than 15 dB in the frequency range of 5000 Hz or less.
Poor: A frequency with transmission loss TL of less than 5 dB was found in the frequency range of 5000 Hz or less.

Evaluation Criteria of Absorption Rate $\beta$

Good: The absorption rate is 0.4 or more in the frequency range from 500 Hz to 2000 Hz.
Fair: The absorption rate is 0.2 or more and less than 0.4 in the frequency range from 500 Hz to 2000 Hz.
Poor: The absorption rate is less than 0.2 in the frequency range from 500 Hz to 2000 Hz.

Overall Evaluation

Good: Both the transmission loss TL and the absorption rate $\beta$ are very satisfactory (Good).
Fair: The transmission loss TL and the absorption rate $\beta$ are very satisfactory (Good) or satisfactory (Fair).
Poor: One or both of the transmission loss TL and the absorption rate $\beta$ are not satisfactory (Poor).

[Table 2]

| | First Fiber Aggregate Layer | | | Second Fiber Aggregate Layer | | | Transmission Loss Evaluation | Absorption Rate Evaluation | Overall Evaluation |
|---|---|---|---|---|---|---|---|---|---|
| | Average Fiber Diameter | Bulk Density | Height (Thickness) | Average Fiber Diameter | Bulk Density | Height (Thickness) | | | |
| Example 2-1 | 800 nm | 0.2 g/cm$^3$ | 20 mm | 4450 nm | 0.05 g/cm$^3$ | 10 mm | Good | Fair | Fair |
| Example 2-2 | 800 nm | 0.2 g/cm$^3$ | 15 mm | 4450 nm | 0.05 g/cm$^3$ | 15 mm | Good | Fair | Fair |
| Example 2-3 | 800 nm | 0.2 g/cm$^3$ | 10 mm | 4450 nm | 0.05 g/cm$^3$ | 20 mm | Good | Good | Good |
| Example 2-4 | 800 nm | 0.1 g/cm$^3$ | 10 mm | 4450 nm | 0.05 g/cm$^3$ | 20 mm | Fair | Good | Fair |
| Example 2-5 | 1500 nm | 0.2 g/cm$^3$ | 10 mm | 4450 nm | 0.05 g/cm$^3$ | 20 mm | Good | Good | Good |
| Example 2-6 | 800 nm | 0.2 g/cm$^3$ | 10 mm | 7700 nm | 0.05 g/cm$^3$ | 20 mm | Fair | Good | Fair |
| Example 2-7 | 800 nm | 0.1 g/cm$^3$ | 10 mm | 7700 nm | 0.05 g/cm$^3$ | 20 mm | Good | Good | Good |
| Example 2-8 | 1500 nm | 0.2 g/cm$^3$ | 10 mm | 7700 nm | 0.05 g/cm$^3$ | 20 mm | Good | Good | Good |
| Comparative Example 2-1 | 4450 nm | 0.05 g/cm$^3$ | 30 mm | - | - | - | Poor | Good | Poor |
| Comparative Example 2-2 | 800 nm | 0.2 g/cm$^3$ | 30 mm | - | - | - | Good | Poor | Poor |
| Comparative Example 2-3 | 4450 nm | 0.05 g/cm$^3$ | 10 mm | 800 nm | 0.2 g/cm$^3$ | 20 mm | Good | Poor | Poor |

As clearly seen from Figs. 12 through 19, in Examples 2-1 through 2-8, the transmission loss TL was 5 dB or more in the entire frequency range of 5000 Hz or less and satisfactory sound insulating performance was exhibited similar to each Example above of the fiber aggregate for sound insulation. Particularly in Examples 2-1 through 2-3, 2-5, 2-7, and 2-8, the transmission loss TL was 15 dB or more and very satisfactory sound insulating performance was exhibited equivalent to Examples 1-9 through 1-12 above of the fiber aggregates for sound insulation with a bulk density of 0.3 g/cm$^3$.

In addition, in Examples 2-1 through 2-8, the absorption rate $\beta$ in the frequency range from 500 Hz to 2000 Hz was at least 0.2 or more and the sound was effectively confined inside. Particularly in Examples 2-3 through 2-8, the first fiber aggregate layer had a height lower than the height of the second fiber aggregate layer and thus the sound energy proceeded while effectively absorbed by the second fiber aggregate layer composed of the relatively thick fibers at low density and blocked by the first fiber aggregate layer composed of the relatively fine fibers at high density. The sound energy reflected on the surface of the first fiber aggregate layer was further absorbed by the second fiber aggregate layer, and it is thus assumed to allow more effective confinement of the sound inside.

That is, in the sound absorbing and insulating material in the present embodiment, the sound generated indoors, (1) upon incidence on the second fiber aggregate layer, proceeds while absorbed by the second fiber aggregate layer, and (2) upon reaching the first fiber aggregate layer, proceeds while further absorbed by the first fiber aggregate layer. The sound generated indoors after passing through the sound absorbing and insulating material is thus greatly attenuated. Moreover, the sound generated indoors, (2') upon reaching the first fiber aggregate layer, is reflected on the boundary surface and proceeds in the second fiber aggregate layer towards the sound source side while absorbed by the second fiber aggregate layer. This is considered to increase the chance of absorption (sealing) of the sound generated indoors. In addition, the sound generated outdoors is reflected on the first fiber aggregate layer with relatively high transmission loss TL and thus considered to less likely to enter indoors.

In Examples 2-3, 2-5, 2-7, and 2-8, both the transmission loss TL and the absorption rate $\beta$ are very satisfactory and excellent sound insulating performance and sound absorbing performance can be exhibited.

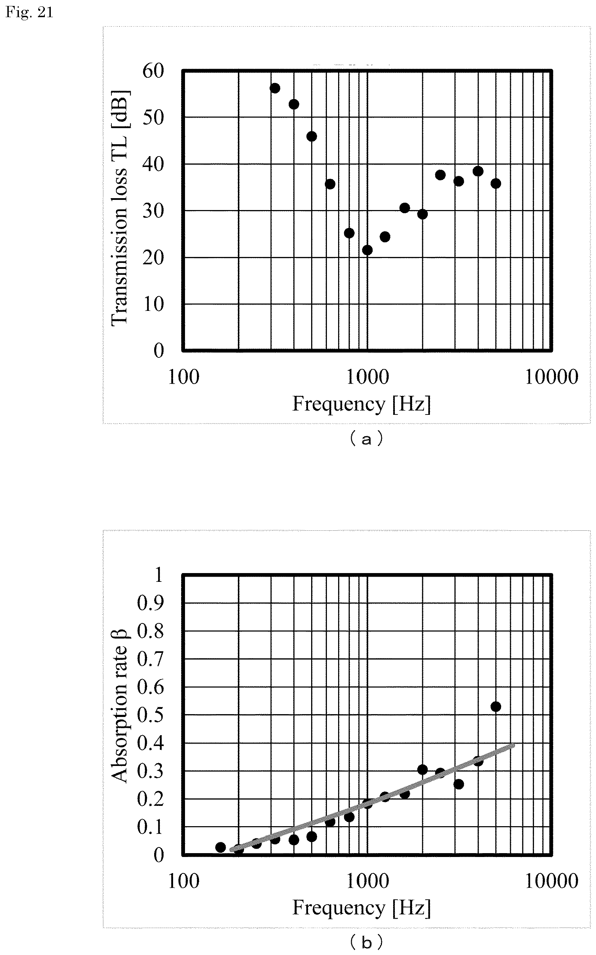

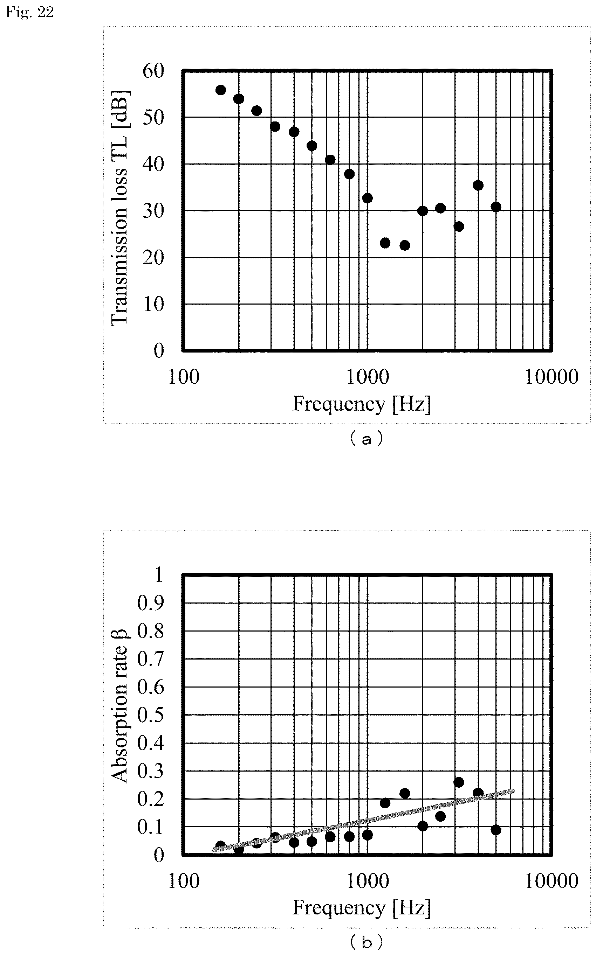

In contrast, as clearly seen from Fig. 20, in Comparative Example 2-1, the transmission loss TL was generally low and the transmission loss TL in a low frequency range was less than 5 dB and it was not possible to exhibit sufficient sound insulating performance. In addition, as clearly seen from Figs. 21 and 22, in Comparative Examples 2-2 and 2-3, the transmission loss TL was high and sufficient sound insulating performance was exhibited while the absorption rate $\beta$ was low and the sound was not sufficiently confined. Still in addition, Comparative Example 2-3 had a configuration where that in Example 2-1 was inversed and the positions of the first fiber aggregate layer and the second fiber aggregate layer were exchanged. In Example 2-1, since the second fiber aggregate layer on the sound source side was composed of the relatively thick fibers at low density, it was possible to effectively take the sound energy inside. In contrast, in Comparative Example 2-3, since the second fiber aggregate layer on the sound source side was composed of the relatively fine fibers at high density, the sound energy was reflected and it was not possible to effectively take the sound energy inside. Accordingly, from the comparison between Example 2-1 and Comparative Example 2-3, it is understood that the configuration in which the second fiber aggregate layer arranged on the indoor side (the side close to the sound source) and the first fiber aggregate layer arranged on the outdoor side (the side distant from the sound source) allows effective improvement in the absorption rate $\beta$.

From the above results, it was confirmed that sound absorbing and insulating materials composed by superimposing the first fiber aggregate layer with an average fiber diameter approximately from 800 nm to 1500 nm and a bulk density approximately from 0.1 g/cm$^3$ to 0.2 g/cm$^3$ on the second fiber aggregate layer with an average fiber diameter approximately from 4450 nm to 7700 nm and a bulk density of approximately 0.05 g/cm$^3$ exhibited excellent sound insulating performance and sound absorbing performance. In particular, it was confirmed that the first fiber aggregate layer with a height (thickness) lower than the height (thickness) of the second fiber aggregate layer allowed the sound insulating performance and the sound absorbing performance to be effectively exhibited. In addition, it was preferred to arrange the second fiber aggregate layer on the side close to the sound source and to arrange the second fiber aggregate layer on the side distant from the sound source.

Relationship of Composition of Fiber Aggregate with Absorption Coefficient and Transmission Loss

The present inventors then prepared Examples 3-1 through 3-8 of the fiber aggregate for sound insulation according to the present invention described below and measured their absorption coefficient $\alpha$ and the transmission loss TL.

Example 3-1

A fiber aggregate for sound insulation of the fine fibers 95 described above formed in a cylindrical shape with an average fiber diameter of 800 nm, a bulk density of 0.05 g/cm$^3$, and a height (thickness) of 50 mm.

Example 3-2

A fiber aggregate for sound insulation of the fine fibers 95 described above formed in a cylindrical shape with an average fiber diameter of 1500 nm, a bulk density of 0.05 g/cm$^3$, and a height of 50 mm.

Example 3-3

A fiber aggregate for sound insulation of the fine fibers 95 described above formed in a cylindrical shape with an average fiber diameter of 4450 nm, a bulk density of 0.05 g/cm$^3$, and a height of 50 mm.

Example 3-4

A fiber aggregate for sound insulation of the fine fibers 95 described above formed in a cylindrical shape with an average fiber diameter of 7700 nm, a bulk density of 0.05 g/cm$^3$, and a height of 50 mm.

Example 3-5

A fiber aggregate for sound insulation of the fine fibers 95 described above formed in a cylindrical shape with an average fiber diameter of 800 nm, a bulk density of 0.1 g/cm$^3$, and a height of 50 mm.

Example 3-6

A fiber aggregate for sound insulation of the fine fibers 95 described above formed in a cylindrical shape with an average fiber diameter of 1500 nm, a bulk density of 0.1 g/cm$^3$, and a height of 50 mm.

Example 3-7

A fiber aggregate for sound insulation of the fine fibers 95 described above formed in a cylindrical shape with an average fiber diameter of 4450 nm, a bulk density of 0.1 g/cm$^3$, and a height of 50 mm.

Example 3-8

A fiber aggregate for sound insulation of the fine fibers 95 described above formed in a cylindrical shape with an average fiber diameter of 7700 nm, a bulk density of 0.1 g/cm$^3$, and a height of 50 mm.

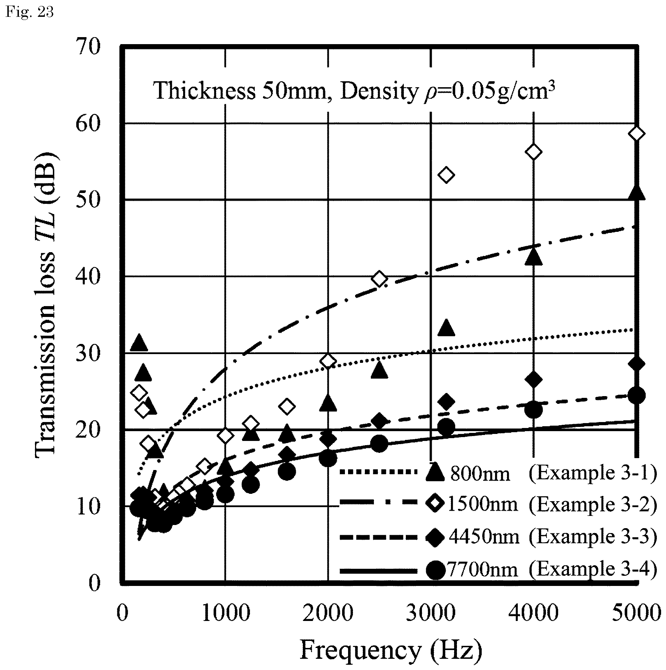

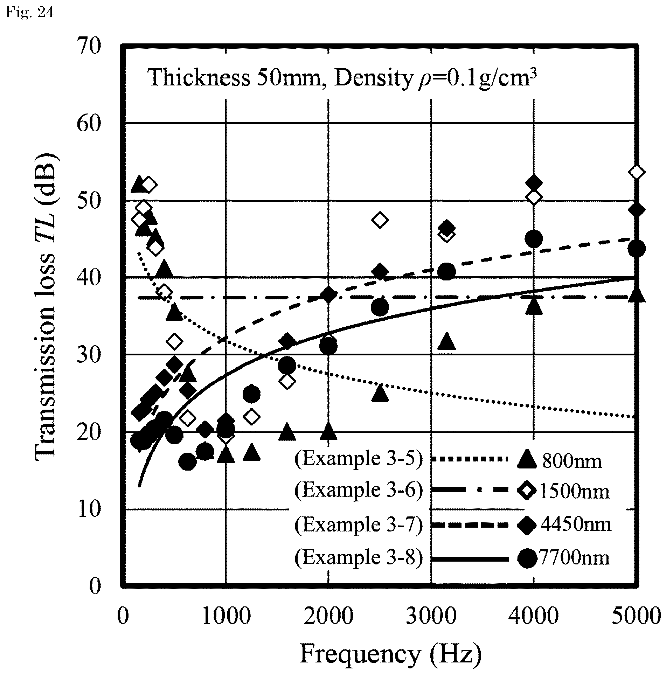

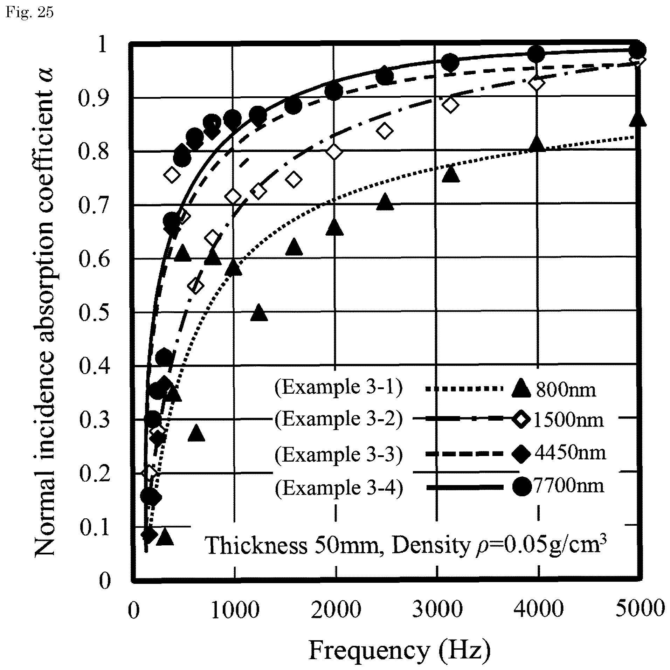

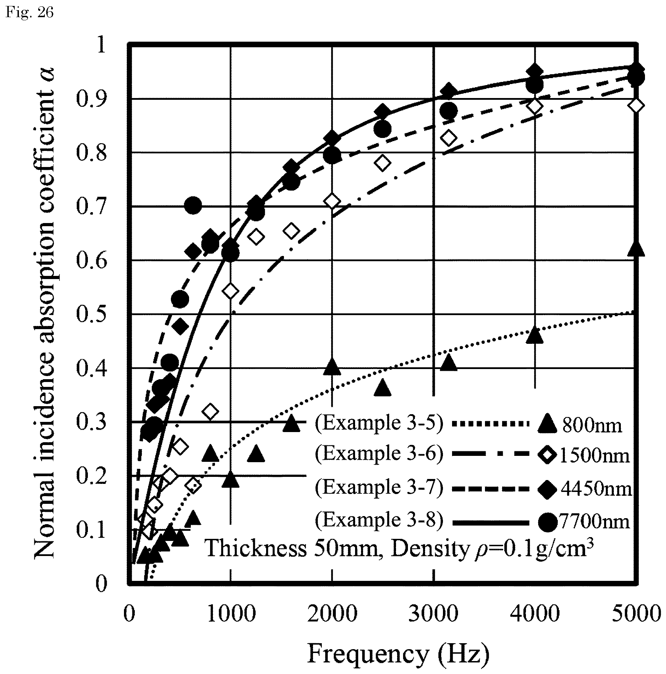

For Examples 3-1 through 3-8 described above, the absorption coefficient $\alpha$ and the transmission loss TL were measured using the measuring device 10 described above. Figs. 23 and 24 illustrate the transmission loss TL in Examples 3-1 through 3-8, and Figs. 25 and 26 illustrate the absorption coefficient $\alpha$ in Examples 3-1 through 3-8.

As clearly seen from Figs. 23 and 24, in the frequency range of 1000 Hz or less, those with a smaller average fiber diameter (800 nm, 1500 nm) tend to have higher transmission loss TL than those with a greater average fiber diameter (4450 nm, 7700 nm). In addition, those with a higher bulk density (0.1 g/cm$^3$) tend to have higher transmission loss TL than those with a lower bulk density (0.05 g/cm$^3$). It was thus confirmed that the fiber aggregates for sound insulation with a smaller average fiber diameter and a higher bulk density were more suitable.

As clearly seen from Figs. 25 and 26, in the frequency range of 1000 Hz or less, those with a greater average fiber diameter (4450 nm, 7700 nm) tend to have a higher absorption coefficient $\alpha$ than those with a smaller average fiber diameter (800 nm, 1500 nm). In addition, those with a lower bulk density (0.05 g/cm$^3$) tend to have a higher absorption coefficient $\alpha$ than those with a higher bulk density (0.1 g/cm$^3$). That is, it was understood that those with a greater average fiber diameter and a lower bulk density had a higher absorption coefficient $\alpha$.

In this situation, a high absorption coefficient $\alpha$ indicates that the reflected sound energy is less and more sound energy is taken inside the fiber aggregate. Then, for absorption (sealing) of the sound energy by the sound absorbing and insulating material, it is important to reduce the reflected sound energy and take more sound energy inside to be effectively attenuated inside.

In the sound absorbing and insulating material according to Examples described above (Examples 2-1 through 2-8), the second fiber aggregate layer with a greater average fiber diameter and a lower bulk density was arranged on the side close to the sound source and the first fiber aggregate layer with a smaller average fiber diameter and a higher bulk density was arranged on the side distant from the sound source. Such a configuration caused more sound energy to be taken inside the second fiber aggregate layer and to proceed in the second fiber aggregate layer for attenuation of the sound energy. Moreover, the sound energy reaching the first fiber aggregate layer was reflected on the boundary surface with the first fiber aggregate layer and proceeded again in the second fiber aggregate layer towards the sound source side to be further attenuated. From these points, the sound absorbing and insulating material of the present invention has the first fiber aggregate layer and the second fiber aggregate layer, and it is thus assumed to allow more effective confinement of the sound energy inside and it is possible to exhibit excellent sound insulating performance and sound absorbing performance (sealing performance).

Although the embodiments of the present invention have been described above, the present invention is not limited to them. The above embodiments subjected to addition, deletion, and/or design change of components appropriately by those skilled in the art and those having the characteristics of the embodiments appropriately combined are included in the scope of the present invention as long as including the spirit of the present invention.

Reference Signs List

| 1 | First Fiber Aggregate Layer |
|---|---|
| 2 | Second Fiber Aggregate Layer |
| 5 | Sound Absorbing and Insulating Material |
| 10 | Measuring Device |
| 11 | Body |
| 12 | Sound Source |
| 13 | Sound Absorbing Wall |
| 14 | Incident Compartment |
| 15 | Transmission Compartment |
| 21-24 | Microphone |
| 50 | Production Device |
| 62 | Hopper |
| 63 | Heating Cylinder |
| 64 | Heater |
| 65 | Screw |
| 66 | Motor |
| 68 | Gas Supply Pipe |
| 70 | Head |
| 90 | Collecting Net |
| 95 | Fine Fiber |
| TP | Sample |
| Da, Db | Average Fiber Diameter |
| pa, pb | Bulk Density |
| ta, tb | Thickness |
| TL | Transmission Loss |
| $\alpha$ | Absorption Coefficient |
| $\beta$ | Absorption Rate |

## Claims

1. A fiber aggregate for sound insulation, wherein
the fiber aggregate for sound insulation satisfies formulae (i) and (ii) below where the fiber aggregate for sound insulation has an average fiber diameter of Da and a bulk density of pa.

   (i) 450 nm $\leq$ Da $\leq$ 8500 nm
   (ii) 0.09 g/cm$^3$ $\leq$ $\rho$a $\leq$ 0.33g/cm$^3$

2. The fiber aggregate for sound insulation according to Claim 1, wherein the fiber aggregate for sound insulation further satisfies a formula (i') below.

   (i') 450 nm $\leq$ Da $\leq$ 1650 nm

3. The fiber aggregate for sound insulation according to Claim 1, wherein the fiber aggregate for sound insulation further satisfies a formula (ii') below.

(ii') 0.09 g/cm$^3 \leq \rho$a $\leq$ 0.22 g/cm$^3$

4. The fiber aggregate for sound insulation according to Claim 1, wherein the fiber aggregate for sound insulation further satisfies formulae (i") and (ii") below.

(i") 1350 nm $\leq$ Da $\leq$ 1650 nm
(ii") 0.18 g/cm$^3 \leq \rho$a $\leq$ 0.22 g/cm$^3$

5. A sound absorbing and insulating material comprising: a first fiber aggregate layer; and a second fiber aggregate layer superimposed on the first fiber aggregate layer, wherein
the first fiber aggregate layer is composed of the fiber aggregate for sound insulation according to any one of Claims 1 through 4,
the second fiber aggregate layer is composed of a fiber aggregate satisfying formulae (iii) and (iv) below where the fiber aggregate has an average fiber diameter of Db and a bulk density of pb.

(iii) 4000 nm $\leq$ Db $\leq$ 8500 nm
(iv) 0.04 g/cm$^3 \leq \rho$b $\leq$ 0.06 g/cm$^3$

6. The sound absorbing and insulating material according to Claim 5, wherein the sound absorbing and insulating material further satisfies a formula (v) below where the first fiber aggregate layer has a thickness of ta and the second fiber aggregate layer has a thickness of tb.

(v) ta < tb

7. The sound absorbing and insulating material according to Claim 5, wherein the sound absorbing and insulating material further satisfies a formula (vi) below.

(vi) ta/tb $\leq$ 1/2

8. The sound absorbing and insulating material according to any one of Claims 5 through 7, wherein the first fiber aggregate layer and the second fiber aggregate layer are composed of an identical material.

9. A sound absorbing and insulating material for a vehicle used for a vehicle, the material comprising the sound absorbing and insulating material according to any one of Claims 5 through 7, wherein
the first fiber aggregate layer is arranged on an outdoor side of the vehicle and the second fiber aggregate layer is arranged on an indoor side of the vehicle.

Fig. 1

（a）

（b）

（c）

Fig. 2

( a )

tb  ta

SOUND
GENERATED INDOORS

SOUND GENERATED OUTDOORS

( b )

Fig. 3

Fig. 4

EP 3 675 118 A1

Fig. 5

Fig. 6

Fig. 7

Fig. 8

Fig. 9

Thickness 10mm, Density $\rho$=0.2g/cm³

| (Example 1-5) | — — O | 500nm |
| (Example 1-6) | - - - ◆ | 1500nm |
| (Example 1-7) | — · — ◇ | 4450nm |
| (Example 1-8) | —— ● | 7700nm |

Fig. 10

Thickness 10mm, Density $\rho$=0.3g/cm³

| (Example 1-9) | — — O | 500nm |
| (Example 1-10) | - - - ◆ | 1500nm |
| (Example 1-11) | — · — ◇ | 4450nm |
| (Example 1-12) | —— ● | 7700nm |

Fig. 11

Thickness 10mm, Density $\rho$=0.1g/cm$^3$

Transmission loss TL [dB]

- ○ **Felt** (Comparative Example 1-1)
- ◆ **Urethan** (Comparative Example 1-2)
- ● **Polyester** (Comparative Example 1-3)

Frequency [Hz]

Fig. 12

（a）

（b）

Fig. 13

(a)

(b)

Fig. 14

（a）

（b）

Fig. 15

(a)

(b)

Fig. 16

（a）

（b）

Fig. 17

（a）

（b）

Fig. 18

（a）

（b）

Fig. 19

(a)

(b)

Fig. 20

(a)

(b)

Fig. 21

（a）

（b）

Fig. 22

（a）

（b）

Fig. 23

Fig. 24

Fig. 25

Fig. 26

## INTERNATIONAL SEARCH REPORT

International application No.

PCT/JP2018/024744

**A. CLASSIFICATION OF SUBJECT MATTER**
Int.Cl. G10K11/162(2006.01)i, B32B5/26(2006.01)i, B60R13/08(2006.01)i,
G10K11/168(2006.01)i

According to International Patent Classification (IPC) or to both national classification and IPC

**B. FIELDS SEARCHED**

Minimum documentation searched (classification system followed by classification symbols)
Int.Cl. G10K11/162, B32B5/26, B60R13/08, G10K11/168

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 11-20570 A (NISSAN MOTOR CO., LTD.) 26 January 1999,<br>paragraphs [0017]-[0019], [0035]-[0036], [0041], fig, 1, 5<br>(Family: none) | 1, 5-8<br>9 |
| X | JP 2014-214398 A (TEIJIN LTD.) 17 November 2014, claim 1,<br>paragraph [0011] (Family: none) | 1-4 |
| X | JP 2014-37647 A (KURARAY CO., LTD.) 27 February 2014,<br>paragraphs [0028], [0030] (Family: none) | 1-4 |
| X | JP 2015-197601 A (TEIJIN LTD.) 09 November 2015, claim 1,<br>paragraphs [0023], [0025] (Family: none) | 1-4 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 August 2018 (02.08.2018) | 14 August 2018 (14.08.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**REFERENCES CITED IN THE DESCRIPTION**

**Patent documents cited in the description**

- JP 2017181925 A
- JP 2015065171 A
- JP 6047786 B